# EUROPÄISCHE PATENTANMELDUNG

(11) **EP 1 262 910 A2**
(43) Veröffentlichungstag der Anmeldung: **04.12.2002**
(21) Anmeldenummer: 02011523.4
(22) Anmeldetag: 23.05.2002
(51) Int. Cl.: G06K 15/10, G06K 15/12

(54) **Elektronische Krümmungsgrob- und Krümmungsfeinkorrektur für eine Schreibeinrichtung**

(30) Priorität: 30.05.2001 US 870305
(71) Anmelder: NexPress Solutions LLC, Rochester, NY 14653-7103 (US)
(72) Erfinder: Chapman, William L., Hemlock, NY 14466 (US); Ng, Yee Seung, Fairport, NY 14450 (US); O'Hara, Shawn Edward, Rochester, NY 14616 (US)
(74) Vertreter: Franzen, Peter

(57) **Zusammenfassung**

Die vorliegende Erfindung betrifft ein Verfahren und eine Vorrichtung zur Verbesserung der Linearität von Elementen in einem Druckkopf durch Anwenden einer groben elektronischen Einstellung zur Neuanordnung des elektronischen Daten in der richtigen Pixellinie und anschließendes Anwenden einer feinen elektronischen Einstellung, um den Krümmungsfehler auf einen Bruchteil einer Pixellinie zu reduzieren. Die elektronische Feineinstellung nutzt Steuersignale zur Verzögerung der Belichtung, um die Linearität um einen Bruchteil einer Pixellinie zu korrigieren. Die Verzögerungen lassen sich wiederholen, um die Anzahl der verfügbaren Verzögerungen zu vervielfachen und die lineare Auflösung zu erhöhen

## Beschreibung

Die vorliegende Erfindung betrifft Krümmungskorrekturtechniken in linearen Anordnungen und insbesondere effiziente Konstruktionen, die eine stärkere Krümmungskorrektur vorsehen und im Vergleich mit Konstruktionen nach dem Stand der Technik weniger Schaltungsverbindungen erforderlich sind.

Die Verwendung mechanischer Platzierungsvorrichtungen zur Positionierung von Elementen in linearen Anordnungen führt zu inhärenten Abweichungen von einer wirklich linearen Lage. Bei den Elementen, die üblicherweise in linearen Anordnungen positioniert werden, kann es sich um Elemente handeln, die Daten empfangen, sowie um Elemente, die Daten senden. Hierzu zählen Vollformat-Scanner, Vollformat-Tintenstrahldrucker sowie elektrostatische Drucker. Bei Tintenstrahldruckern und elektrostatischen Druckern müssen die LEDs und die zugehörigen Treiber in linearen Anordnungen platziert werden. Bei Vollformat-Scannern müssen Sensoren in linearen Anordnungen platziert werden. In jedem der genannten Fälle gibt es Referenzen auf den Stand der Technik mit Beschreibungen von Verfahren und Vorrichtungen zur Verbesserung der Linearität von den in diesen Vorrichtungen verwendeten Elementen. Die folgende Beschreibung betrifft insbesondere die elektrofotografische Technik. Es sei jedoch darauf hingewiesen, dass ähnliche oder gleiche Sachverhalte für weitere Arten von Empfangs- oder Sendelementen zutreffen, die einer linearen Platzierung bedürfen.

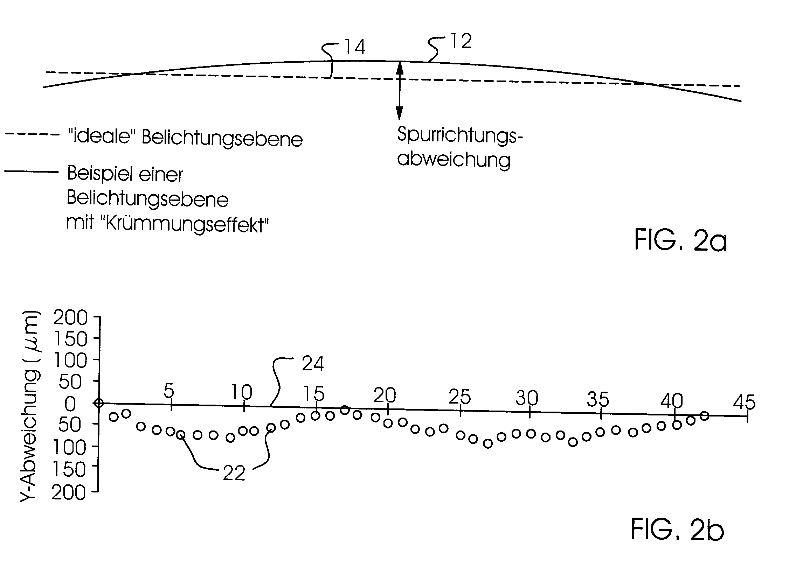

In der elektrofotografischen Technik besteht eine inhärente Prozessabweichung bei der Druckkopffertigung und der Linsenmontage, was dazu führt, dass einzelne LED-Belichtungsbahnen untereinander nicht direkt ausgerichtet sind, was allgemein als Spurrichtung (In-Track Direction / IT) bezeichnet wird. Hierfür gibt es mehrere Ursachen, u.a. eine Abweichung in der Platzierung der LEDs auf dem Chip, eine schräge Platzierung des LED-Chips auf dem Träger, ein Linearitätsfehler der Linsen, eine Abweichung der Linsen, eine inhärente Krümmung in den Linsen, mechanische Fertigungsprozesse sowie andere Ursachen. Der Begriff "Krümmung" bezeichnet im vorliegenden Dokument eine gekrümmte Linie von LEDs. Idealerweise sollte eine LED-Belichtungsebene keinem "Krümmungseffekt" unterliegen, wie in Fig. 2a anhand einer vollkommen geraden Linie dargestellt. Dies gilt insbesondere für eine Druckvorrichtung mit mehreren Stationen oder eine mehrfarbige Tandemmaschine, da Druckköpfe mit ähnlicher Richtung und Größe der "Krümmung" in derselben Maschine verwendet werden müssen, um eine akzeptable Farbregistrierung zu erzielen.

Nach dem Zusammenbau von elektrofotografischer Schreibeinrichtung und Optik lässt sich die Pixelabweichung der Schreibeinrichtung (von einer geraden Linie) auf der Bildebene messen. In vielen Fällen übersteigt die Pixelpositionsabweichung von der Spurrichtung / In-Track Direction (Krümmung) den Pixelabstand (in einem System mit 600 dpi (Punkte pro Zoll) kann die Krümmung beispielsweise mehr als 1/600 Zoll betragen). Beschreibungen nach dem Stand der Technik haben gezeigt, dass sich diese Art der Pixelpositionsabweichung elektronisch unter Verwendung einer digitalen Schaltung auf dem Druckkopf der Schreibeinrichtung korrigieren lässt. Eine derartige Beschreibung ist die Parallelanmeldung US 5,585,386. Die Beschreibung in US 5,585,386 ist zur Reduzierung einer Farb-Fehlregistrierung verwertbar, die in einer Tandem-Druckmaschine auftritt, sowie zur Korrektur der Fehlausrichtung in Druckkopfsystemen, die einer Pixelabweichung in den Elementen der Druckkopfschreibeinrichtung unterliegen. Das Dokument nach dem Stand der Technik beschreibt eine elektronische Einstellung zur Neuanordnung der fehlausgerichteten, elektronischen Druckdaten in der richtigen Pixellinie. US 5,585,386 weist den Nachteil auf, dass die Schaltung zur Korrektur der Pixelfehlausrichtung einer Vielzahl von Schaltungsverbindungen bedarf, die durch die Druckkopfleiterplatte zu den LED-Treibern geführt werden müssen. Die Beschreibung aus US 5,585,386 sieht zudem eine Pixelausrichtungs-Korrekturschaltung vor, die zahlreiche Halbleiter verwendet, die insgesamt viel Platz belegen.

Fig. 2b ist ein Beispiel einer LED-Fehlausrichtung in einem Druckkopf aufgrund von Positionsabweichungen, die sich über die Länge des Druckkopfes erstrecken. Die Kreise bezeichnen jeweils die Enden der LED-Chip-Anordnungen. Es sei darauf hingewiesen, dass dieser spezielle Druckkopf zwei getrennte Bereiche umfasst, die einem Krümmungseffekt unterliegen. Es gibt eine negative Krümmungskurve in der ersten Hälfte (linke Seite der Kurve) der LED-Positionsmessungen, anschließend nähert sich die Kurve im Mittelteil dem Idealverlauf, worauf in der zweiten Kurvenhälfte wieder eine negative Krümmungskurve gemessen wird. Hierbei handelt es sich nur um ein Beispiel für eine Schreibeinrichtung; andere Schreibeinrichtungen können ganz andere Kurvenformen annehmen. Die aktuellen Ausrichtungsverfahren geben sehr enge Toleranzen für die LED-Platzierung vor, indem sie die eingehenden LED-Platzierungspositionen messen, die Druckköpfe nach der resultierenden Krümmung sortieren und dann Druckköpfe für den Einsatz in derselben Maschine auswählen, die ähnliche Krümmungseigenschaften besitzen. Mit Bezug auf Fig. 2b, in der eine besondere Doppelkrümmung gezeigt wird, wird deutlich, dass es immer schwieriger wird, die besonderen Krümmungscharakteristika mehrerer anderer Druckköpfe zu treffen. Die durch das Sortieren entstehenden Kosten sind für Fertigung, Lagerhaltung und Service sehr hoch und die Logistik ist sehr schwierig. Es besteht daher nach dem Stand der Technik Bedarf nach einer Konstruktion, die die mechanischen Platzierungsfehler korrigiert, die innerhalb eines einzelnen Pixelabstands liegen. Außerdem besteht Bedarf nach einer Schaltungskonstruktion, die eine elektronische Verzögerungsschaltung vorsieht, die eine Pixelabstandskorrektur innerhalb eines einzelnen Pixelabstands oder eines Pixelunterabstands erzielt, die weniger Schaltungselemente umfasst.

Die vorliegende Erfindung löst die zuvor genannten Probleme aus dem Stand der Technik mithilfe eines Verfahrens und einer Vorrichtung zur Verbesserung der Linearität, mit der die LED-Elemente eines Druckkopfes ein Empfangselement belichten. Die montierten Schreibeinheiten weisen eine Pixelausrichtung auf, die von einer geraden Linie abweicht, die auf einer Bildebene messbar ist. In vielen Fällen kann die Pixelpositionsabweichung in Spurrichtung (Krümmung) größer sein als der Pixelabstand. Die vorliegende Erfindung löst diese Art der Pixelpositionsabweichung elektronisch, um eine Farbfehlregistrierung in Tandem-Druckmaschinen zu reduzieren. Die vorliegende Erfindung führt eine grobe elektronische Einstellung durch, um das elektronische Drucken der Daten in der richtigen Pixellinie neu anzuordnen, um dann an den Pixeln eine elektronische Feineinstellung vorgenommen durchzuführen, um den Krümmungsfehler weiter auf einen Bruchteil einer Pixellinie zu reduzieren. Die elektronische Feineinstellung nutzt Steuersignale zur Verzögerung der Belichtung, um die Linearität um einen Bruchteil einer Pixellinie zu korrigieren. Die Verzögerungen lassen sich wiederholen, um die Anzahl der verfügbaren Verzögerungen zu vervielfachen und die lineare Auflösung zu erhöhen. Die Verzögerungen können zudem zwischen ungeraden und geraden Reihen von Elementen gemittelt werden, um die scheinbare Auflösung zu erhöhen. Das erste Ausführungsbeispiel nutzt zur Feineinstellung der Pixeldaten eine digitale Schaltung, die teilweise auf der Schnittstellenkarte und teilweise auf dem Druckkopfträger angeordnet ist. Dadurch reduziert sich der Schaltungsanteil in den ASICs auf dem Druckkopfträger. Die Schaltung zur Feineinstellung nach dem ersten Ausführungsbeispiel erzeugt eine Mehrzahl von Signalen auf einer einzelnen Schaltungsbahn zwischen Schnittstellenkarte und Druckkopfträger, wobei die Signale jeweils zu unterschiedlichen Zeiten aktiv sind. In dem zweiten Ausführungsbeispiel ist die gesamte elektronische Feineinstellung in den ASICs auf dem Druckkopfträger angeordnet, wodurch es im Vergleich mit dem ersten Ausführungsbeispiel weniger Verbindungen zwischen Schnittstellenkarte und Druckkopfträger gibt.

Das erste Ausführungsbeispiel der vorliegenden Erfindung nutzt zur Feineinstellung der Pixeldaten eine digitale Schaltung, die teilweise auf der Schnittstellenkarte und teilweise auf dem Druckkopfträger angeordnet ist. Dadurch reduziert sich der Schaltungsanteil in den ASICs auf dem Druckkopfträger. In der elektrofotografischen Drucktechnik kann ein Druckkopf mit Tausenden von LEDs bestückt sein, die auf kleinem Raum angeordnet sind. Diese LEDs sind mit einer Treiberschaltung verbunden, die ihrerseits mit weiterer Elektronik verbunden ist. Die Verbindungen auf dem Druckkopfschreiber bestehen aus zahlreichen Drähten, die dünner als ein menschliches Haar sind. Die Komplexität einer modernen Druckkopfkonstruktion gibt eine große Zahl von Verbindungen vor. Diese Signale müssen dann durch den eigentlichen Druckkopf transportiert werden, was weitere Signalbahnen und zugehörige Verbindungen erfordert. Das erste Ausführungsbeispiel der vorliegenden Erfindung löst dieses Problem durch Bereitstellen einer Druckkopfvorrichtung, die die notwendigen Signale auf der Schnittstellenkarte und in ASICs auf dem LED-Träger erzeugt.

Das zweite Ausführungsbeispiel der vorliegenden Erfindung verwendet weniger Verbindungen zwischen der Schnittstellenkarte und dem Druckkopfträger als das erste Ausführungsbeispiel der Erfindung. Im Gegenzug dazu ist ein größerer Anteil der Schaltung in den ASICs auf dem Druckkopfträger angeordnet. Dadurch müssen weniger Signale durch den eigentlichen Druckkopf transportiert werden. Allerdings muss dadurch zusätzliche Schaltung in den ASICs auf dem Druckkopfträger angeordnet werden. Das zweite Ausführungsbeispiel der vorliegenden Erfindung sieht eine Druckkopfvorrichtung vor, die die nötigen Signale auf dem Druckkopfträger in ASICs erzeugt, die ihrerseits mit den LED-Treibern ausgestattet sind, wodurch die Notwendigkeit entfällt, diese Signale aus der elektronischen Leiterplatte zu importieren, die zu dem Druckkopf eine Schnittstelle bildet.

Diese und weitere Aufgaben werden erfindungsgemäß mit einer Krümmungskorrekturschaltung für die lineare Anordnung von Elementen gelöst, die folgendes umfasst: einer Trägerbaugruppe mit einer Vielzahl von Elementen, denen jeweils Treiber-Unterbaugruppen zugeordnet sind, wobei jedes der Elemente ein Pixel in einer Linie darstellt; eine Schnittstellenkarte, die mit der Trägerbaugruppe gekoppelt ist, wobei die Schnittstellenbaugruppe eine Schaltung umfasst, die Bilddaten für die Elemente verarbeitet; eine Krümmungs-Grobkorrekturschaltung auf der Schnittstellenkarte, die die Pixel elektronisch anordnet, um die Linearität durch ganzzahlige Pixelabstände zu verbessern, und eine Krümmungs-Feinkorrekturschaltung, die mindestens teilweise auf dem Träger angeordnet ist, wobei die Feinkorrekturschaltung eine erste Schaltung vorsieht, die einer Vielzahl von Elementen gemeinsam ist, und eine zweite Schaltung, die einem bestimmten Element zugeordnet ist, wobei die zweite Schaltung eine Verzögerung aus einer Verzögerungsmenge auswählt, die die Linearität der Pixel innerhalb der Linie um einen Bruchteil eines Pixelabstands verbessert.

Die Erfindung wird im folgenden anhand in der Zeichnung dargestellter Ausführungsbeispiele näher erläutert. Es zeigen
- Fig. 1: eine Baugruppenzeichnung zur Darstellung einer Schreibeinheit mit einer Trägerbaugruppe und Elektronik für eine LED-Anordnung sowie Bilderarbeitungselektronik auf einer Schnittstellenkarte;
- Fig. 2a: ein Diagramm zur Darstellung des Krümmungseffekts im Vergleich mit der idealen Belichtungsebene;
- Fig. 2b: ein Beispiel für verschiedene Krümmungseffekte, die sich aus fehlausgerichteten LED-Elementen ergeben;
- Fig. 3: eine Darstellung der Art der groben elektronischen Ausrichtung zur Korrektur fehlausgerichteter Elemente;
- Fig. 4: den Datenstrom zur Durchführung der in Fig. 3 gezeigten Korrektur;
- Fig. 5: ein Zeitablaufdiagramm für die in Fig. 4 gezeigte Grobkorrektur;
- Fig. 6: ein Blockdiagramm für eine Schnittstellenkarte mit der in Fig. 3, 4 und 5 beschriebenen Grobkorrektur;
- Fig. 7: eine Darstellung der Feineinstellung zur Korrektur von LED-Elementen, die nur um einen einzelnen Pixelabstand fehlausgerichtet sind;
- Fig. 8a: ein schematisches Blockdiagramm der Feineinstellungsfunktion zur Darstellung der relativen Platzierung von Funktionen auf der Schnittstellenkarte und auf dem Träger, wie nach dem ersten bevorzugten Ausführungsbeispiel der Erfindung vorgesehen;
- Fig. 8b: ein Blockdiagramm der auf dem Träger angeordneten Feineinstellungselektronik, wie nach dem ersten bevorzugten Ausführungsbeispiel der Erfindung vorgesehen;
- Fig. 8c: ein Blockdiagramm der auf der Schnittstellenkarte angeordneten Feineinstellungselektronik, wie nach dem ersten bevorzugten Ausführungsbeispiel der Erfindung vorgesehen;
- Fig. 8d: ein Zeitablaufdiagramm für die Diagramme aus Fig. 8a und 8b;
- Fig. 9a: ein Blockdiagramm der Feineinstellungselektronik, wie nach dem zweiten bevorzugten Ausführungsbeispiel der Erfindung vorgesehen;
- Fig. 9b: ein Diagramm des in Fig. 9a gezeigten Verzögerungsblocks zur Darstellung von Schaltungen, die einmal pro Treiber auf dem Träger in dem zweiten bevorzugten Ausführungsbeispiel der Erfindung reproduziert werden; und
- Fig. 10: ein Zeitablaufdiagramm zur Feineinstellung für die in Fig. 9a und 9b gezeigte Schaltung;
- Fig. 11: ein Blockdiagramm der pro Treiber verwendeten Feineinstellungsschaltung;
- Fig. 12: ein detailliertes Blockdiagramm der Feineinstellungsschaltung, die für jedes LED-Element reproduziert wird;
- Fig. 13a: ein Diagramm zur Darstellung der gleichmäßigen Verschiebung ungerader und gerader Pixel;
- Fig. 13b: ein Diagramm zur Darstellung der Verschiebung nur der ungeraden Pixel um 1/4 einer Linie, ohne die geraden Pixel zu verschieben;
- Fig. 13c: ein Diagramm zur Darstellung der Verschiebung nur der geraden Pixel um 1/4 einer Linie, ohne die ungeraden Pixel zu verschieben; und
- Fig. 14: ein Blockdiagramm einer Schnittellenkarte für das zweite bevorzugte Ausführungsbeispiel der Erfindung.

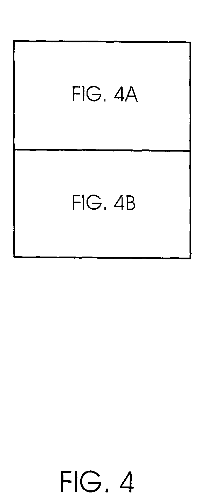

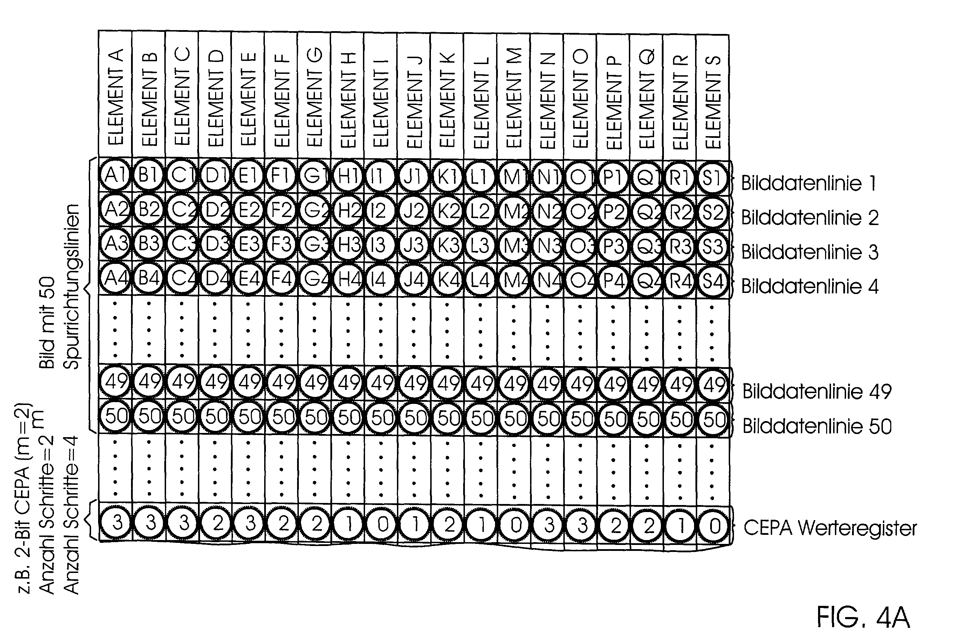

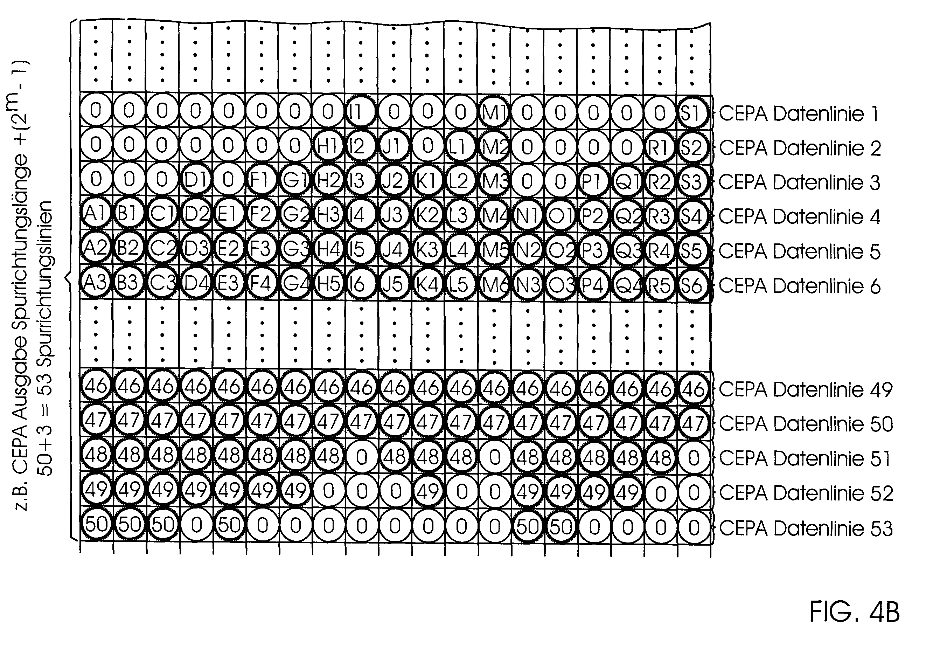

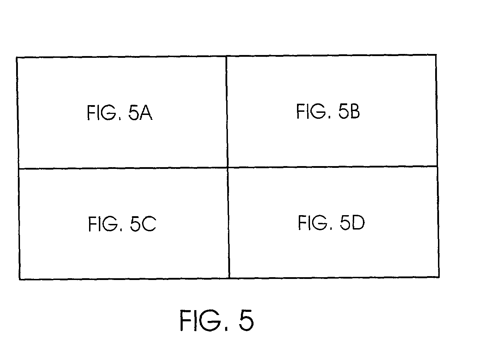

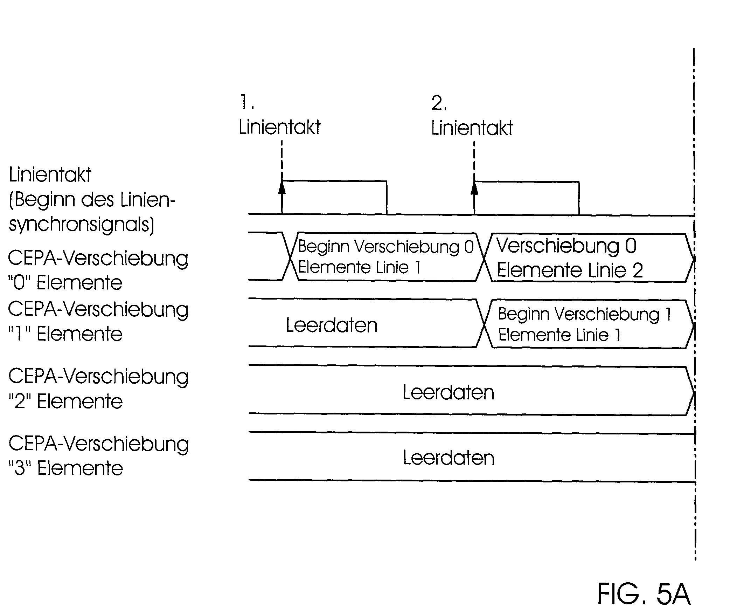

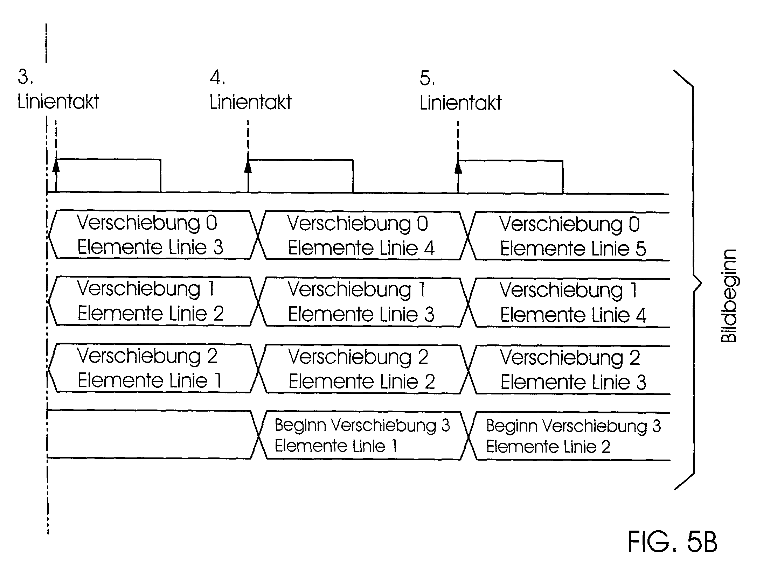

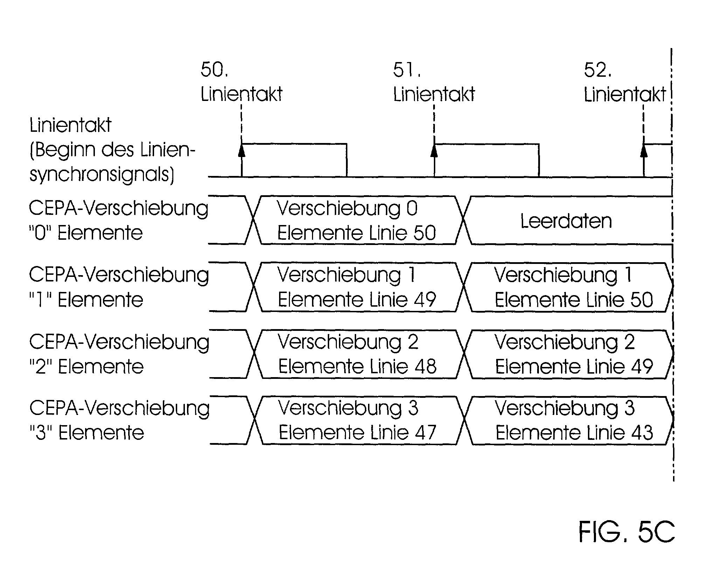

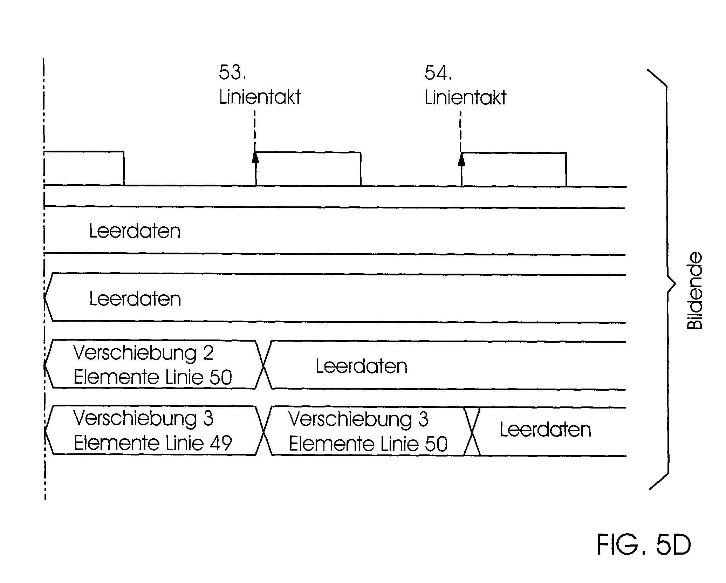

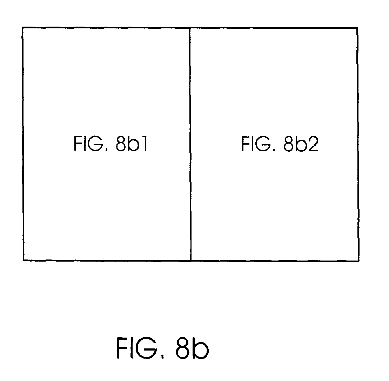

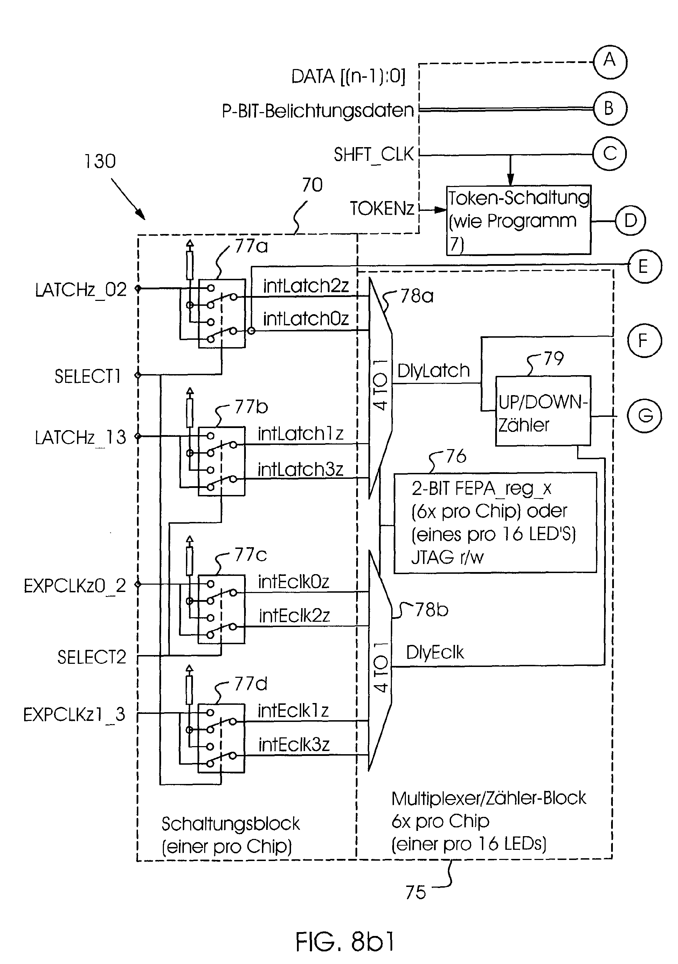

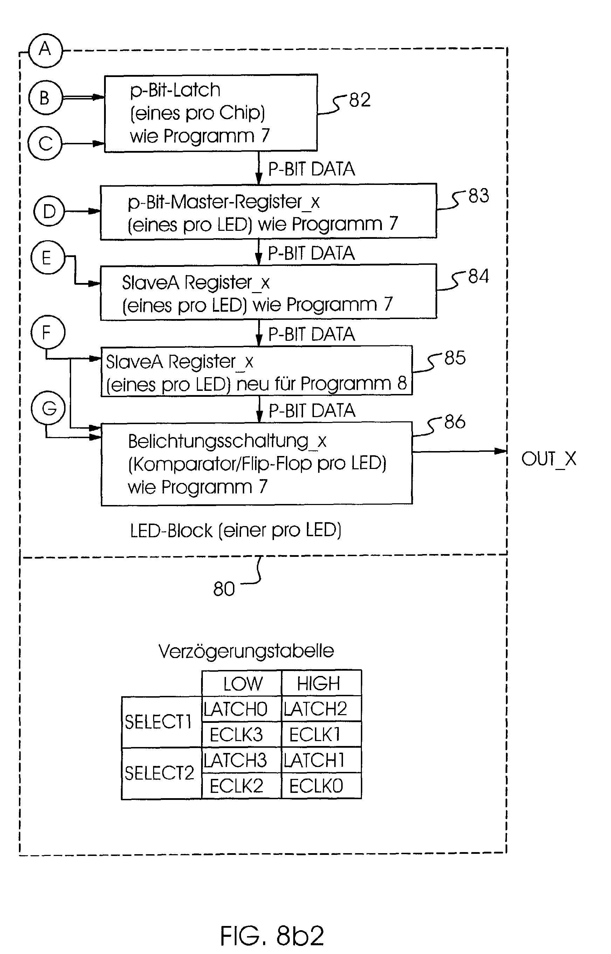

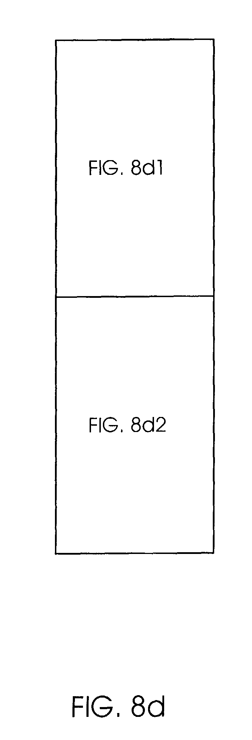

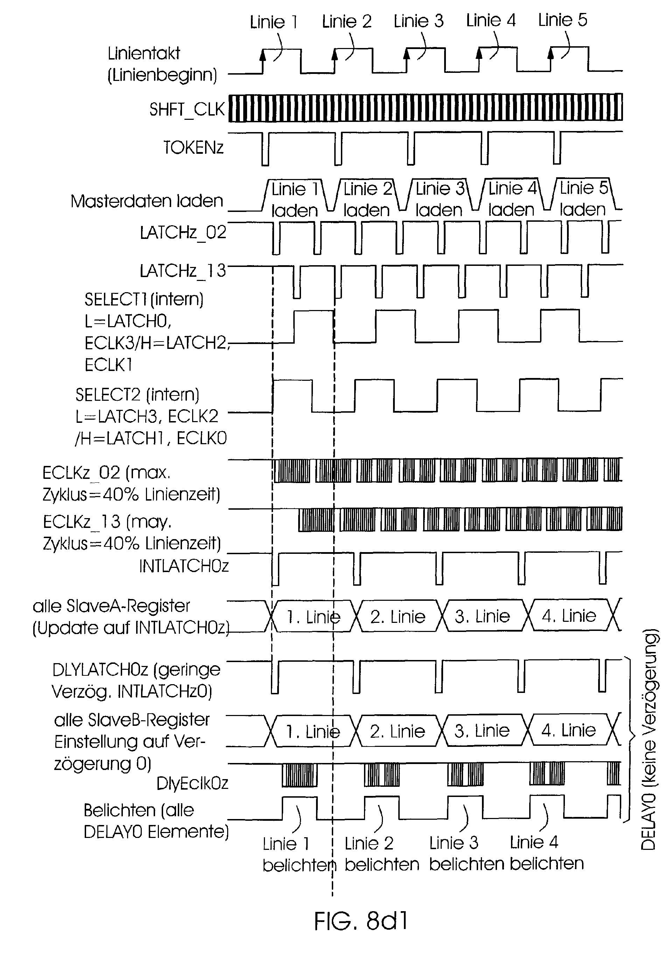

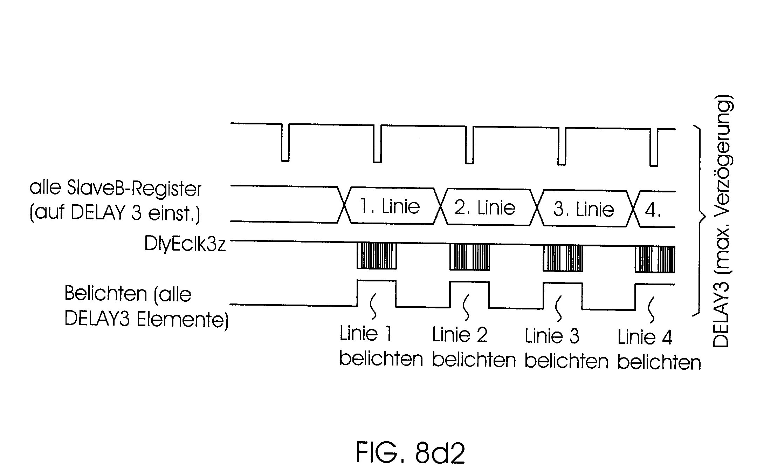

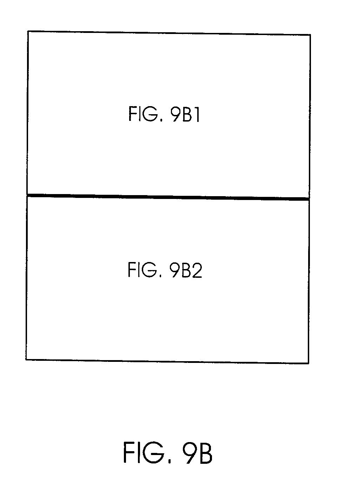

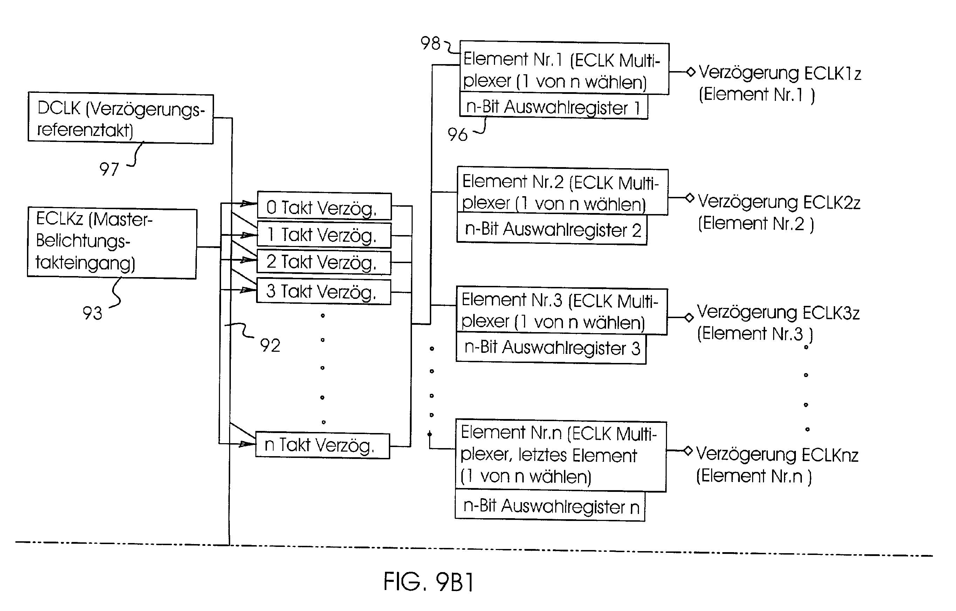

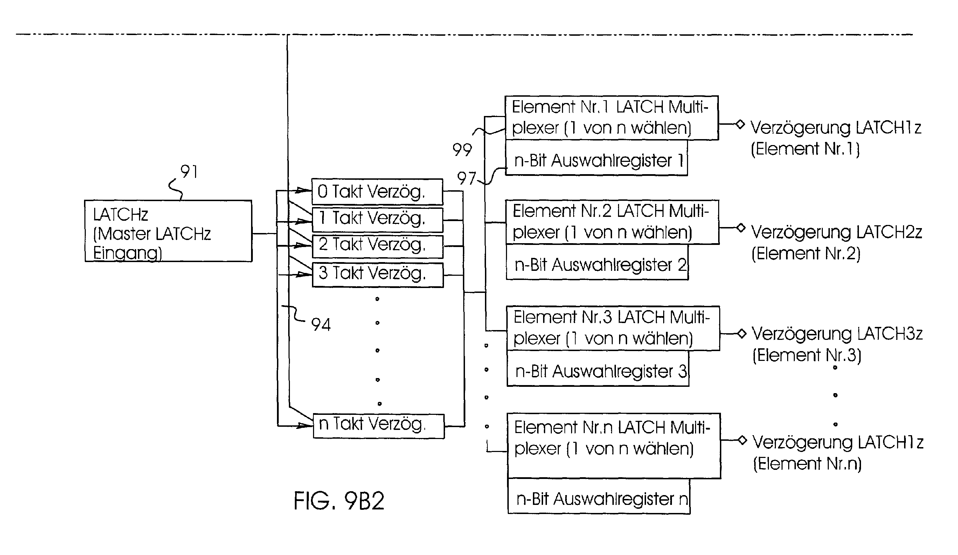

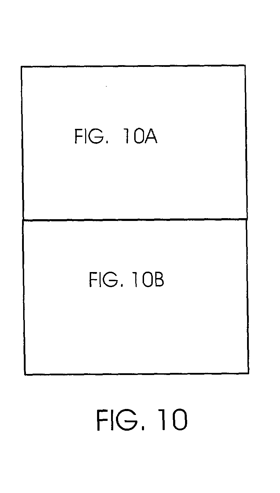

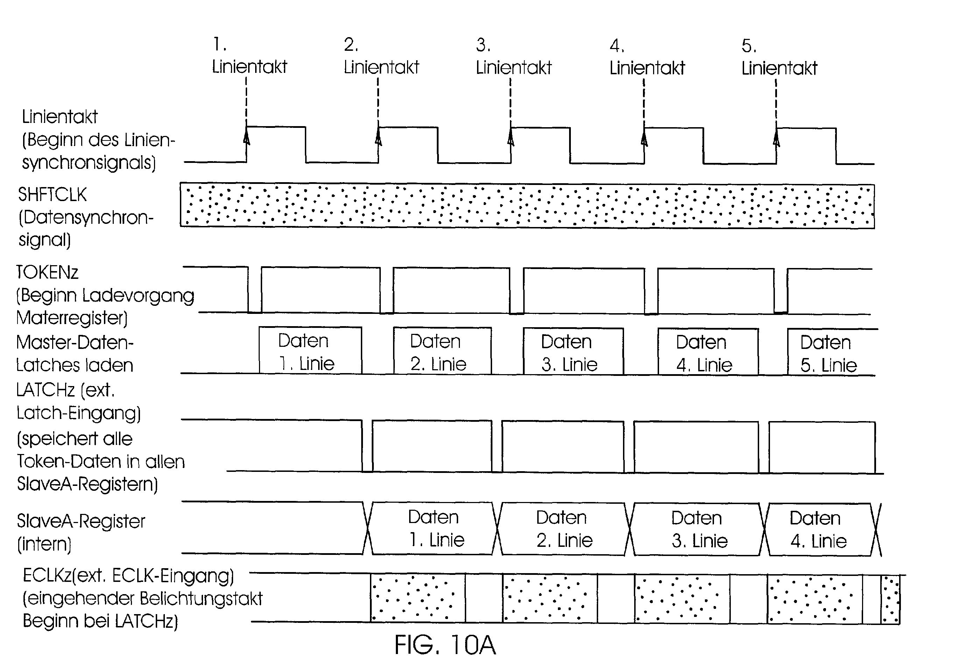

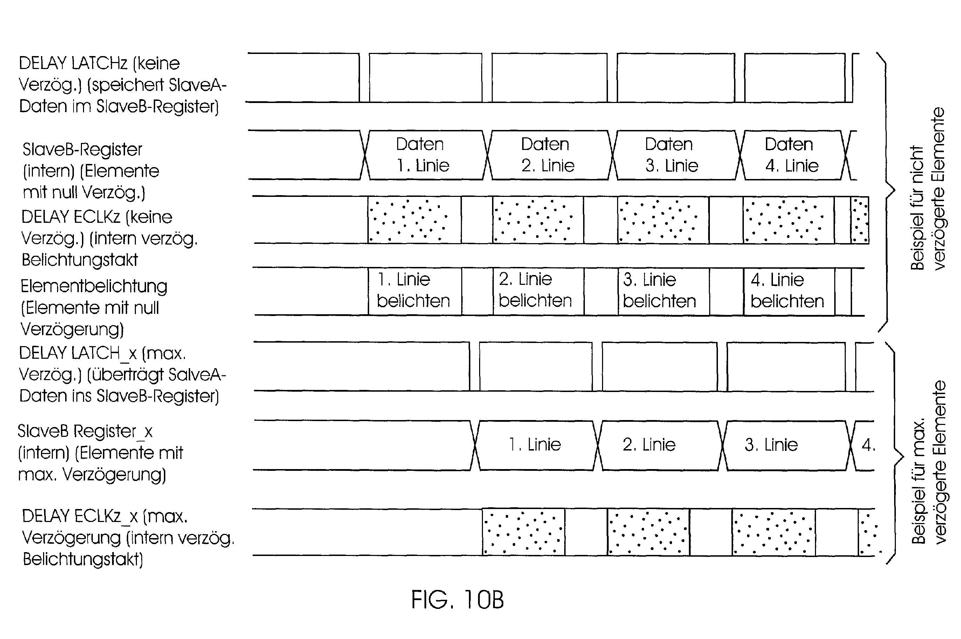

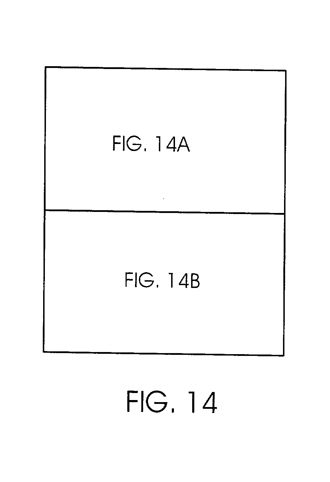

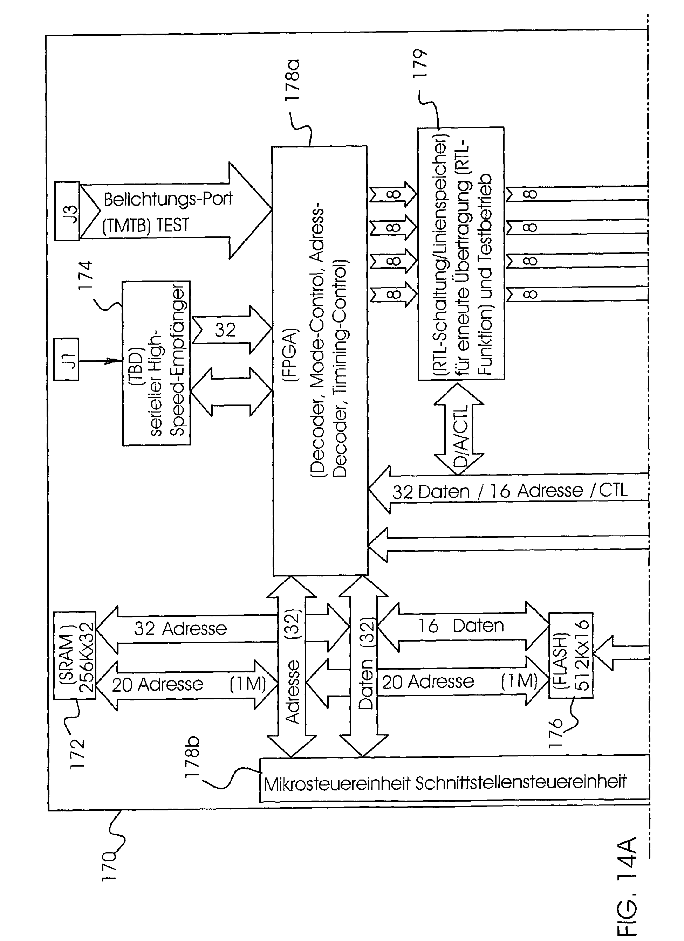

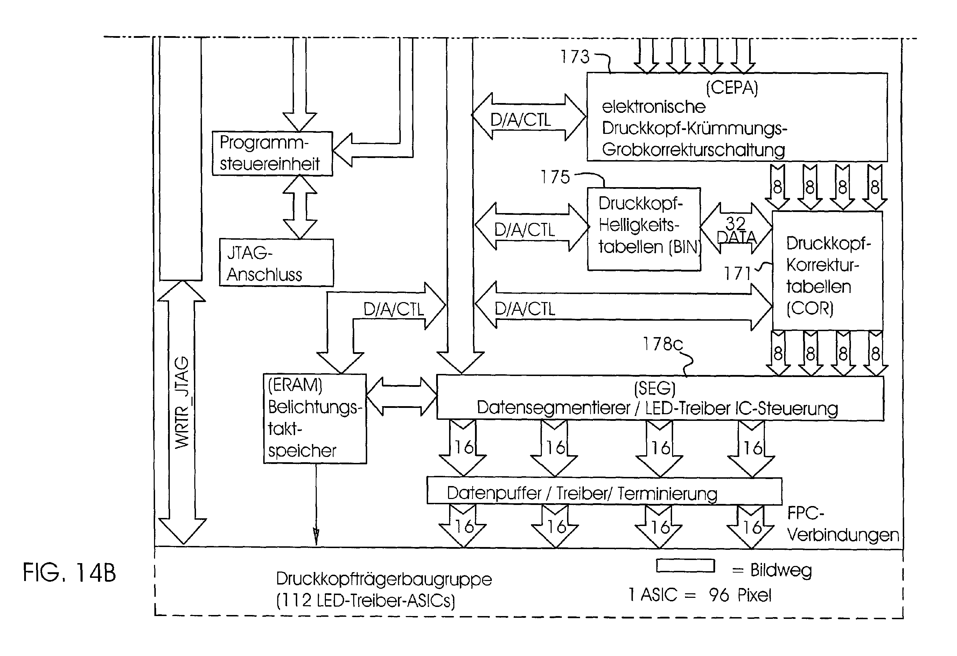

Zur besseren Übersichtlichkeit wurden einige der Figuren auf mehreren Blättern verteilt. Dabei zeigt die im Text genannte Figurennummer jeweils eine Übersicht der Anordnung der jeweiligen vergrößerten Segmente. So wird der Inhalt von Fig. 4 in den Figuren Fig. 4a und Fig. 4b gezeigt, der Inhalt von Fig. 5 in den Figuren Fig. 5a, Fig. 5b, Fig. 5c und Fig. 5d gezeigt, der Inhalt von Fig. 8b in den Figuren Fig. 8b1 und Fig. 8b2 gezeigt, der Inhalt von Fig. 8d in den Figuren Fig. 8d1 und Fig. 8d2 gezeigt, der Inhalt von Fig. 9b in den Figuren Fig. 9b1 und Fig. 9b2 gezeigt, der Inhalt von Fig. 10 in den Figuren Fig. 10a und Fig. 10b gezeigt und der Inhalt von Fig. 14 in den Figuren Fig. 14a und Fig. 14b gezeigt. Im Text wird zur Vereinfachung nur Bezug auf die übergeordneten, oben angegebenen Figurennummern genommen.

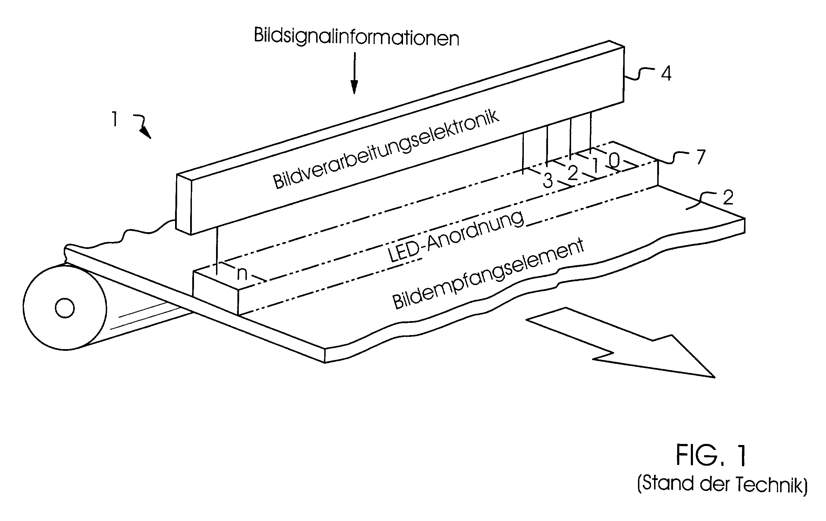

Fig. 1 ist eine Baugruppenzeichnung zur Darstellung einer elektrofotografischen Schreibeinrichtung 1 mit einer Trägerbaugruppe 7, die eine LED-Anordnung mit zugehöriger Elektronik umfasst sowie Bildverarbeitungselektronik auf einer Schnittstellenkarte 4. Die in Fig. 1 gezeigte Schreibeinrichtung 1 ist nach dem Stand der Technik bekannt. Die vorliegende Erfindung betrifft verbesserte Elektronik in der Schnittstellenkarte 4 und der Trägerbaugruppe 7 zur Erzielung einer stärkeren elektronischen Korrektur einer mechanischen Fehlausrichtung der LED-Anordnung auf der Trägerbaugruppe 7.

Fig. 2a ist eine Darstellung des zuvor besprochenen Krümmungseffekts 12 im Vergleich mit der idealen Belichtungsebene 14, während Fig. 2b ein Beispiel kumulierter Krümmungseffekte 22 zeigt, die sich aus der Fehlausrichtung von LED-Elementen in der LED-Anordnung im Vergleich zur idealen Belichtungsebene 24 ergeben. Bei Betrachtung von Fig. 2b wird deutlich, dass der Pixelausrichtungsfehler in Spurrichtung (Krümmung) größer als ein Pixelabstand innerhalb der Linie sein kann. Es ist daher notwendig, die LED-Anordnung derart auszurichten, dass die resultierenden Pixel stärker auf die ideale Belichtungsebene ausgerichtet sind, um eine größere Linearität zu erzielen. Wie bereits besprochen, sind die Beschreibungen nach dem Stand der Technik geeignet, um eine Korrektur bis zum Betrag eines einzelnen Pixelabstands vorzunehmen. Diese Beschreibungen nach dem Stand der Technik geben jedoch keine Auskunft über die Korrektur der Linearität der LED-Anordnung auf einen Betrag von weniger als einem Pixelabstand. Die vorliegende Erfindung sieht eine Grobeinstellung vor, die eine Pixelausrichtung bis auf ungefähr ein Pixel zur idealen Belichtungsebene erzielt. Die vorliegende Erfindung sieht zudem eine Feineinstellung vor, die die Pixel auf einen Bruchteil eines einzelnen Pixelabstands in Bezug zur idealen Belichtungsebene ausrichtet, was zu einer wesentlich größeren Linearität führt. Diese Korrekturtechniken werden in dem bevorzugten Ausführungsbeispiel der Erfindung elektronisch für die Grob- und Feinkorrektur durchgeführt, um sicherzustellen, dass die Daten von der LED auf einen Bruchteil eines Pixelabstands genau gedruckt werden. Bei der Grobeinstellung werden unterschiedliche Drucklinien elektronisch neu ausgerichtet, und zwar anhand des gemessenen Pixelpositionsfehlers zu einer gedachten geraden Linie. Darüber hinaus wird eine Feineinstellung elektronisch durchgeführt, um Pixel auf einen Bruchteil eines Pixelabstands anzuordnen.

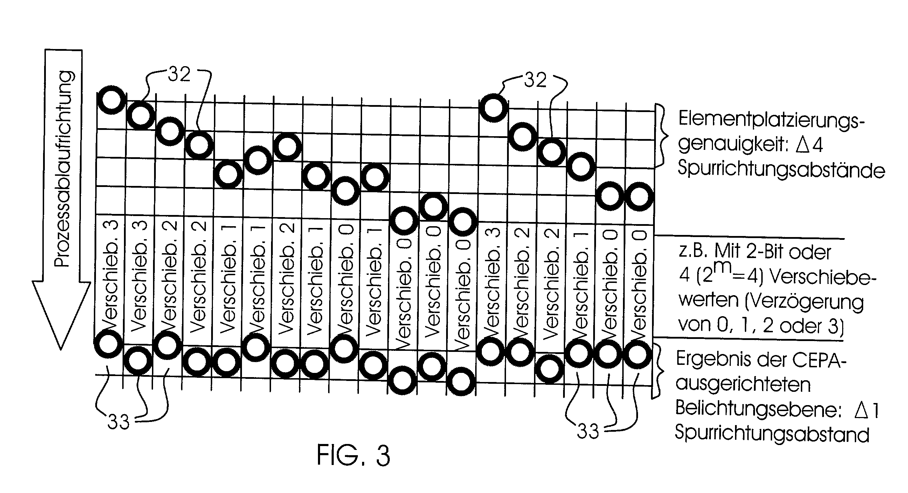

Fig. 3 ist die Darstellung einer groben elektronischen Druckkopfausrichtung (CEPA), die von dem bevorzugten Ausführungsbeispiel der vorliegenden Erfindung durchgeführt wird, um eine mechanische Fehlausrichtung von LED-Elementen 32 zu korrigieren, die dem Fertigungsprozess inhärent ist. Die CEPA-Einstellungsfunktion implementiert zur Erzeugung der korrigierten Pixel 33 folgende Merkmale. Erstens wird eine Anzahl *s* ermittelt, die benutzt wird, um die Anzahl der Verschiebewerte eindeutig wählbarer Linienverzögerungsinkremente darzustellen, die für jedes der LED-Elemente in der Belichtungsvorrichtung benutzt werden. Die Anzahl *s* ist praktisch auf jede Anzahl anwendbar, indem man die Anzahl der Bits ändert, die zur Darstellung der Zahl *s* dienen. Wenn *m* die Bit-Tiefe darstellt, dann lässt sich die Anzahl als *s* = 2^{*m*} darstellen. Die CEPA-Funktion dient dazu, die Belichtungsdaten durch Verzögerung ganzer Linieninkremente grob zu korrigieren. FIG. 3 ist eine auseinandergezogene Darstellung der Grobkorrektur und zeigt vier verschiedene Spurrichtungslinienverschiebewerte (IT), die zur elektronischen Verschiebung von Daten möglich sind (0, 1, 2 oder 3). Fachleuten wird klar sein, dass, je nach Konstruktion, mehr als 4 verschiedene Spurrichtungslinienverschiebewerte (IT-Werte) möglich sind. Fig. 3 zeigt die Implementierung des bevorzugten Ausführungsbeispiels der Grobausrichtung, die zur mechanischen Korrektur fehlausgerichteter Elemente und zur Erstellung einer elektronisch grob ausgerichteten Belichtungsebene in Spurrichtung (IT) herangezogen wird.

Fig. 4 zeigt die den grundlegenden erfindungsgemäßen Datenstrom zur Durchführung der Grobkorrektor der in Fig. 3 gezeigten Art. Der Datenstrom für die Grobkorrektur, wie in Fig. 4 gezeigt, betrifft nur einen Abschnitt mit einer Breite von 19 Elementen. Dieser 19 Elemente breite Abschnitt dient lediglich der Veranschaulichung. Das bevorzugte Ausführungsbeispiel umfasst Tausende von Elementen. Allerdings wäre der Datenstrom für den gesamten Druckkopf viel zu groß, um hier wiedergegeben zu werden. Daher beschränkt sich die Darstellung in Fig. 4 auf einen Abschnitt von lediglich 19 Elementen. Die Daten für die Grobmessung stammen aus einem Messvorgang für die Abtastposition in Spurrichtung (IT), der benutzt wird, um die groben Verschiebungen für die einzelnen Elemente zu bestimmen. Diese Information wird in dem CEPA *m*-Bit-Register gespeichert, wo sie gelesen werden kann, um die groben Verschiebungen der einzelnen Elemente zu implementieren. Dieses Beispiel zeigt *m* mit dem Wert 2, woraus sich vier (2^{*m*} = 4) mögliche Linienverschiebungsinkremente ergeben (0, 1, 2 oder 3). Die Bildlänge 50 bezieht sich in dem 19 Element breiten Abschnitt auf 50 Linien.

Fig. 5 ist ein Zeitablaufdiagramm für den in Fig. 4 gezeigten Datenstrom zur Grobkorrektur. Der obere Teil von Fig. 5 zeigt die Zeitsteuerung zu Beginn eines Bildes, während der untere Teil von Fig. 5 die Zeitsteuerung zum Ende eines Bildes zeigt. Die folgende Erörterung des Zeitablaufdiagramms aus Fig. 5 sollte in Verbindung mit dem CEPA-Datenstromdiagramm aus Fig. 4 betrachtet werden. Bei Auftreten des 1. Linientakts werden Daten, die innerhalb der CEPA-Datenlinie 1 noch nicht verschoben worden sind, um 0 Daten verschoben, die Verarbeitung wird begonnen, und alle höheren Verschiebewerte, die zu verschiebende Daten darstellen, erhalten leere Daten. Bei Auftreten des 2. Linientakts werden Daten, die um eine Linie innerhalb der CEPA-Datenlinie 1 verschoben werden müssen, sowie die Daten mit Verschiebungswert 0 innerhalb der CEPA-Datenlinie 2 verarbeitet, während alle höheren Verschiebewerte leere Daten erhalten. Bei Auftreten des 3. Linientakts beginnt der Strom der Daten, die innerhalb der CEPA-Datenlinie 3 noch nicht verschoben worden sind, sowie der Daten mit Verschiebungswert 1 innerhalb der CEPA-Datenlinie 2 und der Daten mit Verschiebungswert 2 innerhalb der CEPA-Datenlinie 1, während alle höheren Verschiebewerte eine Pause einlegen und leere Daten erhalten. Beim 4. Linientakt beginnt für die Daten mit Verschiebewert 3 für CEPA-Datenlinie 1 sowie für die Daten mit Verschiebewert 2 für CEPA-Datenlinie 2 und die Daten mit Verschiebewert 1 für CEPA-Datenlinie 3 sowie die Daten mit Verschiebewert 0 für CEPA-Datenlinie 4 der Strom der Daten. Dieser Vorgang setzt sich über alle am Ende von Fig. 5 gezeigten Linien fort.

Hinweis: (2^{*m*}-1) zusätzliche Linientakte werden für die vollständige Bildverarbeitung benötigt.

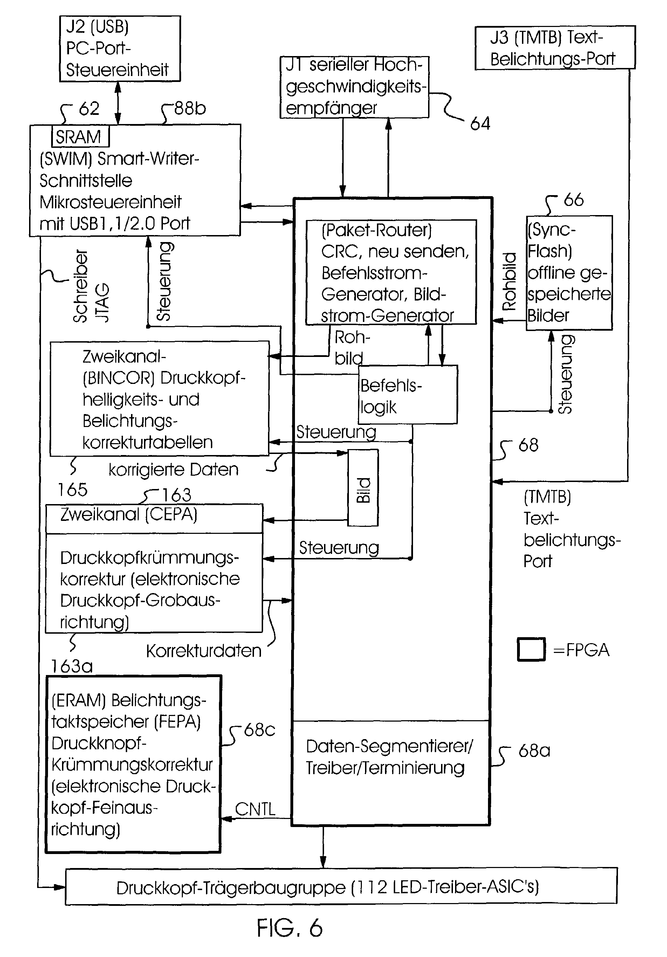

Fig. 6 zeigt ein Blockdiagramm zur Darstellung der von der Schnittstellenkarte 60 durchgeführten Funktionen, einschließlich der CEPA-Funktionen nach dem ersten bevorzugten Ausführungsbeispiel der vorliegenden Erfindung. Die in Fig. 6 gezeigte CEPA-Funktion wird anhand von Werten durchgeführt, die für jedes LED-Element gespeichert sind. Dieser konstruktive Ansatz ermöglicht eine Anpassung der CEPA-Funktion an praktisch jede Breite und an praktisch jedes Format einer Belichtungsvorrichtung, z.B. binär (ein-aus) oder Graustufe (beliebige Bitgröße). Die CEPA-Funktion ist zudem auf jeden Elementabstand anwendbar (z.B. 300 dpi, 400 dpi, 600 dpi, 1200 dpi, ... usw.). Die zur Implementierung der CEPA-Funktion verwendete Hardware kann sich direkt auf der eigentlichen Schnittstellenkarte 60 befinden oder vorgelagert auf dem Weg der Bildverarbeitungselektronik. Die CEPA-Funktion lässt sich vollständig oder teilweise in einem ASIC oder einem ähnlichen Bauelement durchführen. Im ersten Ausführungsbeispiel wird ein FPGA auf der Schnittstellenkarte 60 zur Implementierung der Steuerelektronik für die CEPA-Funktion benutzt. Zur Implementierung der CEPA-Funktion sind zahlreiche diskrete Speicherbausteine vorgesehen. Fachleute werden wissen, dass dies nicht notwendigerweise der Fall sein muss. Mittlerweile ist die FPGA-Technologie so weit fortgeschritten, dass sich diese Speicherbausteine zumindest teilweise in dem FPGA befinden, wie im Rahmen des zweiten Ausführungsbeispiels später besprochen werden wird.

Der SWIM/USB-Anschluss 88b umfasst ein 8K großes internes SRAM 62, das als Arbeitsspeicher für die Software dient, mit der notwendige Operationen für die Vorrichtungen an der Schnittstellenkarte 60 durchgeführt werden. Ein derartiger Bereich ist erforderlich, damit die Software bestimmte Operationen mit Daten und Daten-Arrays ausführen kann. Dieser Speicher ist ein flüchtiger Speicher, d.h. der Speicherinhalt geht verloren, sobald keine Spannung anliegt.

Zur Verbesserung der Bildqualität dient das RTL-Merkmal (Re-Transmit Line). RTL wird von dem CEPA-Block und dem FPGA gemeinsam durchgeführt, wobei der FPGA die RTL-Steuerlogik enthält und wobei der CEPA-Block den Speicher für die Speicherung der Liniendaten bereitstellt. Im Falle eines Übertragungsfehlers auf der seriellen Hochgeschwindigkeitsverbindung für die Bilddaten erkennt die RTL-Schaltung den Fehler, verwirft sämtliche Bildliniendaten und ersetzt die verworfenen Daten mit den vorherigen Bildliniendaten. Die RTL-Schaltung verhindert somit eine Belichtung des Prints mit den fehlerhaften Bilddaten. Fehlerhafte Daten können durch elektromagnetische Abstrahlung oder elektrostatische Entladung sowie durch Spannungsschwankungen in der Stromversorgung entstehen.

Der serielle Hochgeschwindigkeitsempfänger 64 empfängt die Bilddaten von der (nicht gezeigten) Bildausgabekarte. Zur Speicherung spezifischer Daten für die Schreibeinrichtung dient das Flash Memory 66. Das Flash Memory 66 ist in dem bevorzugten Ausführungsbeispiel ein nicht flüchtiger Speicher, damit der Inhalt auch bei nicht anliegender Spannung erhalten bleibt. Bei den Informationen im Flash Memory 66 handelt es sich um druckkopfspezifische Daten einer (nicht gezeigten) Transformationstabelle, um Daten für Druckkopfkalibrierung und Abtastung, um druckkopfspezifische CEPA/FEPA-Daten sowie um weitere druckkopfspezifische Daten. Diese druckkopfspezifischen Daten werden zu Anfang ermittelt und brauchen nicht erneut ermittelt zu werden. Die lokale Speicherung dieser Informationen bietet daher wesentliche Vorteile. Durch die lokale Speicherung entfällt die Notwendigkeit, druckkopfspezifische Dateien in anderen Bereichen zu speichern, also üblicherweise auf einer Festplatte in dem Hauptgerät, von wo die Daten dann zum Druckkopf heruntergeladen werden müssten. Die (nicht gezeigte) Schnittstellensteuereinheit zur Schreibeinrichtung ist der "Kopf" der Schnittstellenkarte 60 und ermöglicht dem Druckkopf die Durchführung notwendiger Einrichtungsprozeduren, und zwar ohne Unterstützung durch andere Prozessoren oder Steuereinheiten, die üblicherweise in dem Hauptgerät angeordnet sind. Dies ist gegenüber Konstruktionen nach dem Stand der Technik ein wesentlicher Vorteil, weil alle Druckkopfoperationen in dem eigentlichen Druckkopf durchgeführt werden, wodurch sich der Datendurchsatz erhöht und der Druckkopf in hohem Maße eigenständig wird. Die Implementierung der Schnittstellensteuereinheit ist in dem ersten bevorzugten Ausführungsbeispiel eine diskrete Mikrosteuereinheit auf der Schnittstellenkarte 60. Moderne FPGA-Bausteine würden es jedoch ermöglichen, die gesamte Schnittstellensteuereinheit in einem größeren FPGA-Baustein auf der Schnittstellenkarte 60 unterzubringen, und zwar in einer Konstruktion, die in dem zweiten bevorzugten Ausführungsbeispiel besprochen wird.

Die BIN/COR-Tabellen 165 umfassen ein synchrones Flash Memory (Sync Flash), das ein nicht flüchtiger Speicher ist, der zur Bereitstellung der Korrekturtabellen (COR) dient, die die Korrekturmerkmale für die Schreibeinheit in einer Weise enthalten, die im Wesentlichen dem Stand der Technik entspricht. Obwohl die von den Korrekturtabellen (COR) durchgeführte Korrektur den herkömmlichen Techniken entspricht, stellt die Einbeziehung der Korrekturtabellen auf der Schnittstellenkarte 60 einen Vorteil der vorliegenden Erfindung dar. Nach dem Stand der Technik sind die Korrekturtabellen üblicherweise früher in dem Bildverarbeitungspfad angeordnet. Die (nicht gezeigten) Druckkopf-Helligkeitstabellen (BIN) enthalten das Korrekturmerkmal für die Helligkeit der Schreibeinheit in einer Weise, die nach dem Stand der Technik bekannt ist und ebenfalls in den BIN/COR-Tabellen 165 enthalten ist. Die CEPA-korrigierten Bilddaten werden dann an die Korrekturtabelle übergeben. Alle Daten durchlaufen nacheinander die elektronische Druckkopf-Grobausrichtung (CEPA) sowie die Korrekturtabellen. Die Druckkopf-Helligkeitstabellen laufen parallel zu den Korrekturtabellen. Die Daten aus den Druckkopf-Helligkeitstabellen steuern eine Hälfte der Korrekturtabellen an, indem sie die Eingabe für die LED-spezifische Helligkeitserkennung liefern, so dass die entsprechende Korrektur erfolgen kann. Die korrigierten CEPA-Daten steuern die andere Hälfte der Korrekturtabellen an. Die Bilddaten und der LED-Adressgenerator steuern die BIN/COR-Tabellen 165 direkt an. Die korrigierten Bilddaten aus den BIN/COR-Tabellen 165 werden in dem RTL/CEPA-Puffer gespeichert. Der Paket-Router ist eine in Firmware implementierte Steuerlogik (im FPGA), die den Strom der Datenpakete zwischen SWIFT-Karte und Host-Karte verwaltet. Die CEPA-korrigierten Bilddaten werden aus dem RTL/CEPA-Puffer anhand der CEPA-Korrekturadresse ausgelesen, die sich aus der LED-Adresse und dem CEPA-Transformationstabellenwert zusammensetzt.

Der Segmentierter/LED-Treiber-IC (SEG) 68a formatiert und synchronisiert die Daten für den Treiber-IC-Datenbus. Der SEG 68a ist in dem ersten bevorzugten Ausführungsbeispiel in dem FPGA 68 implementiert. Auf der Schnittstellenkarte 60 strömen die Daten durch die CEPA-Schaltung 163 in einer Weise, die mit der FIFO-Technik vergleichbar ist. Die Druckkopf-Krümmungskorrektur 163a ist eine elektronische LED-Ausrichtung, wie zuvor besprochen, die innerhalb der CEPA-Schaltung 163 durchgeführt wird. Die CEPA-Schaltung 163 ist mit einem synchronen Flash Memory implementiert, wie zuvor beschrieben, und nicht in dem FPGA 68, weil dies aufgrund der Größenanforderungen der CEPA-Schaltung 163 zu kostspielig sein würde. Die CEPA-Schaltung 163 und die Druckkopf-Krümmungskorrektur 163a schließen sich nacheinander an die Operationen in den BIN/COR-Tabellen 165 an.

Die in dem bevorzugten Ausführungsbeispiel gezeigte CEPA-Funktion 163 wird aus dem FPGA 68 heraus gesteuert und verhält sich ähnlich wie eine FIFO-Operation. Die FIFO-ähnliche Operation wird durch die Logikelemente in dem FPGA 68 vorgesehen, ebenso wie die RTL/CEPA-Pufferung und die Speicherressourcen für die BIN/COR-Tabellen 165. Eine Architektur könnte zudem diskrete FIFO-Komponenten verwenden oder die CEPA-Funktion in einem individuellen VHDL-Code (Hardware Description Language) in dem FPGA 68 implementieren. Die CEPA-Funktion ist zudem mit VHDL-Code in einem SRAM-Speicherbaustein implementierbar. Darüber hinaus sind zahlreiche weitere Konfigurationen denkbar, wie für Fachleute selbstverständlich erkennbar sein wird.

Wie weiter in Fig. 6 dargestellt, ist der Taktgenerator 68c in dem FPGA 68 ausgebildet und enthält einen Belichtungstaktspeicher sowie eine Verzögerungsschaltung, die von der elektronischen Druckkopf-Feinausrichtung (FEPA) benutzt wird, um verzögerte Verriegelungs- und Taktsignale zu erzeugen. Das erste Ausführungsbeispiel der vorliegenden Erfindung verwendet eine Konstruktion, in der diese verzögerten Signale auf der Schnittstellenkarte erzeugt werden, um die ASICs auf dem Druckkopfträger von den Schaltungen zur Durchführung dieser Funktionen zu entlasten. Die Verzögerungsschaltung der FEPA-Funktion stellt verschiedene Versionen von Verriegelungs- und Taktsignalen bereit, die eine elektronische Feinabstimmung der Belichtungsdaten innerhalb eines Bruchteils eines Pixelabstands ermöglichen.

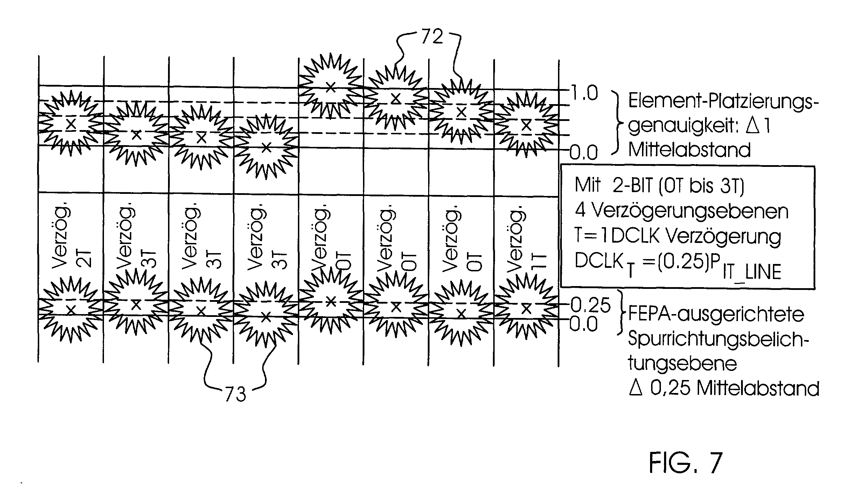

Fig. 7 ist eine Darstellung der elektronischen Druckkopf-Feinausrichtung (FEPA) zur genauen Korrektur der LED-Fehlausrichtung, die nach der elektronischen Druckkopf-Grobausrichtung (CEPA) noch verblieben ist. Nach Anwendung der CEPA-Funktion ergibt sich eine Fehlausrichtung der LED-Elemente, die eine Anordnung der Pixel 72 ergibt, wie in der oberen Zeile von Fig. 7 gezeigt, wobei die Fehlausrichtung eine Größenordnung von ungefähr einem Pixelabstand annimmt (im Falle des bevorzugten Ausführungsbeispiels beträgt der Pixelabstand 1/600 Zoll). Die vorliegende Erfindung sieht daher eine FEPA-Funktion vor, um die gesamte Ausrichtung der korrigierten Pixel 73, wie in der unteren Zeile von Fig. 7b, näher an die ideale Belichtungsebene heranzuführen. Die von dem ersten Ausführungsbeispiel vorgesehene FEPA-Funktion nimmt die Feinabstimmung der Druckkopf-Pixeldaten vor, indem die Schaltung zwischen der Schnittstellenkarte 60 und dem Druckkopfträger aufgeteilt wird. Die Schnittstellenkarte 60 enthält eine Schaltung, die verschiedene Versatzwerte für die Pixeldaten erzeugt. Der Druckkopfträger wählt eine der verschiedenen Verzögerungen aus und implementiert die Verzögerung, um die Pixeldaten enger an die ideale Belichtungsebene heranzuführen. Die auf dem Druckkopfträger angeordnete FEPA-Schaltung befindet sich in integrierten Schaltungen, die gleichzeitig die Treiber für die LED-Elemente sind. Die Elemente der FEPA-Funktion lassen sich auf Pro-Treiber-Basis, auf Pro-Pixelsegment-Basis (in Gruppen von 2, 4, 8 usw. Elementen) oder auf Pro-Pixelelement-Basis implementieren. Fig. 7 zeigt eine auseinandergezogene Darstellung der FEPA-Operation, wobei 2 Bits verwendet werden (woraus sich 2 oder 4 eindeutige Verzögerungswerte ergeben). Fig. 7 zeigt in grafischer Form, wie die FEPA-Funktion eine mechanische Fehlausrichtung der Elemente korrigiert und eine elektronisch in Spurrichtung (IT) ausgerichtete Belichtungsebene erzeugt.

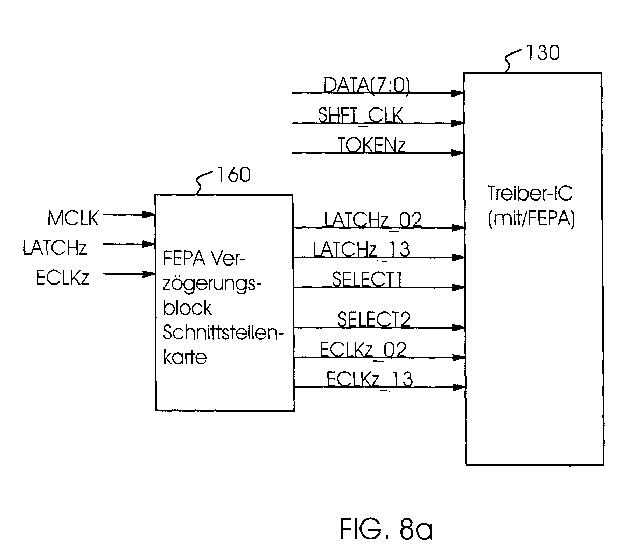

Fig. 8a zeigt das Layout der FEPA-Funktion zwischen der Schnittstellenkarte 60 und dem Druckkopfträger 130 nach dem ersten bevorzugten Ausführungsbeispiel der Erfindung. Wie bereits erwähnt, umfasst die Schnittstellenkarte 60 den FEPA-Verzögerungsblock 160, der als Schaltung dazu dient, verschiedene, um einen bestimmten Betrag verzögerte Signalvarianten für jeden der Eingänge MCLK, LATCHz und ECLKz zu erzeugen. Der FEPA-Verzögerungsblock 160 gibt mehrere FEPA-Signale an den Druckkopfträger 130 aus, in dem der übrige Teil der FEPA-Funktion implementiert ist. Wie in Fig. 8b gezeigt, werden FEPA-Signale in einer einzelnen Schaltungsbahn kombiniert, um die Anzahl von Signalbahnen zwischen der Schnittstellenkarte und dem Druckkopfträger zu reduzieren.

Die Signale, wie Latch0z und Latch2z sind zu jeweils unterschiedlichen Zeiten aktiv und können daher ohne Konflikt dieselbe Schaltungsbahn verwenden. Sie werden daher beide auf derselben Schaltungsbahn LATCHz_02 angelegt. In ähnlicher Weise kombiniert LATCHz_13 die Signale Latch1z und Latch3z, während ECLKz_02 die Signale EclkOz und Eclk2z kombiniert und ECLKz_13 die Signale Eclklz und Eclk3z. "SELECT1" und "SELECT2" ermöglichen die Wahl zwischen den kombinierten Signalen. DATA, SHFT_CLK und TOKENz stammen aus anderen Bereichen der Schnittstellenkarte 60.

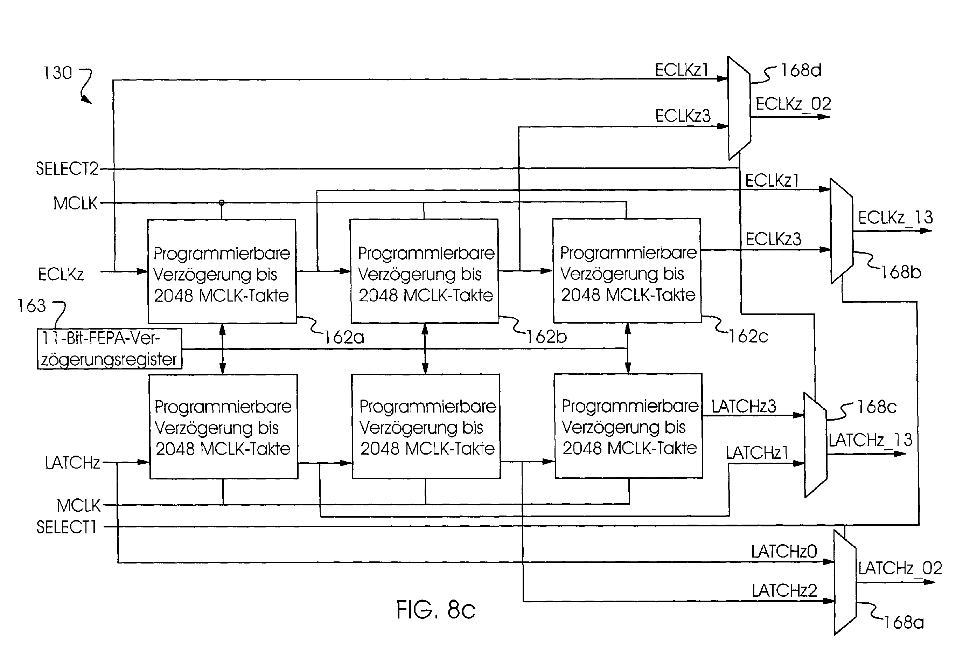

Fig. 8c ist ein detailliertes Blockdiagramm des FEPA-Verzögerungsblocks 160 auf der Schnittstellenkarte 60. Jedes der ECLK- und LATCH-Signale durchläuft drei Verzögerungsschaltungen 162a, 162b und 162c, die jeweils bis zu 1024 Flip-Flop-Verzögerungen umfassen, wobei diese Schaltungen programmierbar sind, was bedeutet, dass die Anzahl der in den Verzögerungen verwendeten Flip-Flops durch das FEPA-Verzögerungsregister 162 veränderbar ist, das in dem bevorzugten Ausführungsbeispiel 11 Bit hat. Die in Fig. 8c gezeigte Schaltung erzeugt drei weitere zeitverzögerte Versionen der Signale ECLK und LATCH, was insgesamt vier Wahlmöglichkeiten schafft: 1) keine Verzögerung; 2) 25% Linienverzögerung; 3) 50% Linienverzögerung oder 4) 75% Linienverzögerung Das 11-Bit-FEPA-Verzögerungsregister 162 wird benutzt, um jeden Verzögerungsblock auf ca. 25% der Linienzeit einzustellen. Indem dieses Register zu einem JTAG-zugänglichen Register gemacht wird, lassen sich die Verzögerungszeiten auf jede Verarbeitungsdruckgeschwindigkeit einstellen. In dem ersten Ausführungsbeispiel werden die ECLK- und LATCH-Signale mit drei Verzögerungsschaltungen 162a, 162b und 162c bereitgestellt, was vier Versionen jedes Signals ergibt, die um jeweils 25% versetzt sind. Indem die Taktfrequenz für die in den Verzögerungsschaltungen 162a, 162b und 162c verwendeten Flip-Flops erhöht wird, sind die Verzögerungsschaltungen wiederverwendbar, so dass die erste Verzögerungsschaltung 162a auch als die vierte Verzögerungsschaltung 162a, die siebte Verzögerungsschaltung 162a usw. dienen kann. Die zweite Verzögerungsschaltung 162b würde auch als die fünfte Verzögerungsschaltung 162b dienen, die achte Verzögerungsschaltung 162b und die dritte Verzögerungsschaltung 162c könnten auch als sechste Verzögerungsschaltung 162c und als neunte Verzögerungsschaltung 162c dienen. Hier würden die Signale select1 und select2 die Verwendung des jeweiligen Verzögerungssignals steuern. Das 11-Bit-FEPA-Verzögerungsregister könnte die Anzahl der Takte in jeder der Verzögerungsschaltungen 162a, 162b und 162c steuern. Die Auflösung könnte von 25% (1/4) einer Line auf 17,5% (1/7) einer Linie und sogar auf 10% (1/10) einer Linie erhöht werden. Es ist zudem vorgesehen, anstatt der Verwendung von drei Verzögerungsschaltungen 162a, 162b und 162c für jedes der Signale ECLK und LATCH nur zwei Schaltungen zu verwenden und wiederzuverwenden, wie zuvor besprochen. Eine derartige Konstruktion könnte eine FEPA-Auflösung von 20% (1/5) einer Linie ergeben, und zwar mithilfe einer Konstruktion, die weniger Schaltungsaufwand erfordert, und die Verzögerungen erzeugt, die zur Erzeugung weiterer Verzögerungen wiederverwendbar sind.

Wie in Fig. 8c gezeigt, kombiniert der Multiplexer 168a die Signale LATCHz0 und LATCHz2 zu LATCHz_02. Auf ähnliche Weise kombiniert der Multiplexer 168b die Signale LATCHz1 und LATCHz3 zu LATCHz_13, der Multiplexer 168c kombiniert die Signale ECLKz1 und ECLKz3 zu ECLKz_13, und der Multiplexer 168d kombiniert die Signale ECLKz0 und ECLKz2 zu ECLKz_02. SELECT1 und SELECT2 dienen dazu, zwischen den kombinierten Signalen zu wählen, wie in der Abbildung gezeigt.

Fig. 8b zeigt eine Darstellung der FEPA-Funktion des ersten bevorzugten Ausführungsbeispiels, die auf dem Druckkopfträger 130 angeordnet ist, und zahlreiche Merkmale umfasst, die sich, wie Fachleuten bekannt sein wird, entweder einzeln oder in Kombination anwendbar sind. Die FEPA-Schaltung ist auf Pro-LED-Basis, auf Pro-Segment-Basis (zu je 16 LEDs in Fig. 8B) und auf Pro-ASIC-Basis implementiert. Diese drei einzelnen Bereiche der FEPA-Funktion sind in Fig. 8B dargestellt. Die Schaltungen sind dann auf Pro-ASIC-Basis vorgesehen, die in der Schaltung 70 zusammengefasst sind. Die Schaltung 70 umfasst die Schaltblöcke 77a, 77b, 77c und 77d, die auf dem Druckkopfträger für jeden ASIC vorgesehen sind. Vier Belichtungstakte und vier Belichtungs-Verriegelungssignale gehen jeweils paarweise kombiniert auf vier Signalleitungen ein, so dass zwei verschiedene, verzögerte Versionen jedes Signals auf jeder Leitung enthalten sind. Die Signalleitung ECLKz_02 führt somit sowohl das Signal ECLK, das eine Verzögerung von null aufweist, sowie das Signal ELCK, das zweifach verzögert ist, als eine einzelne Eingabe zum Schaltungsblock 77c. Auf ähnliche Weise führt die Signalleitung ECLKz_13 das Signal ECLK, das ein Mal verzögert worden ist, sowie das Signal ELCK, das drei Mal verzögert worden ist, als eine einzelne Eingabe zum Schaltungsblock 77d. Die Signalleitung LATCHz_02 führt sowohl das Signal LATCH, das eine Verzögerung von null besitzt, sowie das Signal LATCH, das zwei Mal verzögert worden ist, als eine einzelne Eingabe zum Schaltungsblock 77a. Auf ähnliche Weise führt die Signalleitung LATCHz_13 sowohl das Signal LATCH, das eine Verzögerung von null besitzt, sowie das Signal LATCH, das zwei Mal verzögert worden ist, als eine einzelne Eingabe zum Schaltungsblock 77b. Diese kombinierten Signalleitungen sind möglich, weil die darauf geführten Signale niemals gleichzeitig aktiv sind. Zudem sind die Schaltungsblöcke in dem bevorzugten Ausführungsbeispiel Schalter mit zwei Polen und zwei Schaltbewegungen, die zwei Ausgänge bereitstellen. Einer der Ausgaben für die Schaltungsblöcke 77a, 77b, 77c und 77d liegt an Erde an, während an dem anderen Ausgang das gewählte Signal anliegt. Das von jedem Schaltungsblock 77a, 77b, 77c und 77d verwendete Signal wird durch die Wahlleitungen SELECT1 und SELECT2 bestimmt, die die Ausgabe der Schaltblöcke 77a, 77b, 77c und 77d gemäß der in Fig. 8B2 gezeigten Verzögerungstabelle bestimmen.

Jede der Wahlleitungen SELECT1 / SELECT2 steuert die Schaltblöcke 77a, 77b, 77c und 77d, die die Schaltung zur Wahl entweder der Verriegelungssignale oder der Taktsignale umfasst, die dann auf eine einzelne Signalleitung aufgesetzt werden. Diese Schaltung ermöglicht es den Signalen delay0/delay2 und den Signalen delay1/delay3, dieselbe Signalleitung zu verwenden, wobei zu einem bestimmten Zeitpunkt nur eines der Signale aktiv ist. Dadurch müssen von der Schnittstellenkarte zum Träger mit den ASICs und den LEDs weniger Leitungen kontrolliert werden. In dem bevorzugten Ausführungsbeispiel sind Verzögerungsinkremente von 25% vorgesehen. Daher ist delay0 = keine Verzögerung, delay1 = 25% Linienzeit, delay2 = 50% Linienzeit, delay3 = 75% Linienzeit. In dem bevorzugten Ausführungsbeispiel beträgt der Belichtungszyklus (257 Zyklenperioden) 40% des Linienzeitmaximums. Für einen garantierten Betrieb dieser Implementierung ist es erforderlich, dass der Taktzyklus mit 257 Zyklenperioden (ein Zyklus pro Linie) kleiner als 25% der Linienzeit ist. Wenn der Prozess vorsieht, dass eine Linie alle 100 µs gedruckt wird, dann muss der Taktzyklus mit 257 Zyklenperioden 40 µs oder kleiner sein.

Die Schaltung 70 ist so ausgelegt, dass es einen Schalter pro ASIC gibt, um vier eindeutige Belichtungstakt- und Verriegelungssignalpaare zu erzeugen, wie in Fig. 8B1 gezeigt. Die verzögerten Eclk-Signale und die entsprechend verzögerten Latch-Signale gelangen zu allen sechs MUX/Zähler-Blöcken. Das per Software zugängliche 2-Bit-FEPA-Register (eines für jeden MUX-/Zähler-Block) wählt aus, welcher FEPA-Verzögerungswert (0, 1, 2 oder 3) der eingehenden Verzögerungssignale zu verwenden ist. Dieses gewählte Belichtungstaktsignal und das entsprechende Verriegelungssignal wird an alle LEDs des Abschnitts gesendet. In dem Diagramm enthält jeder Abschnitt 16 LEDs, kann aber an jede Größe angepasst werden, u.a. an eine LED pro Abschnitt, um ein einzelnes Element zu steuern.

Der nächste in Fig. 8b zu besprechende Bereich ist der Segmentblock 75, der pro ASIC mehrere Male auf dem Druckkopfträger vorhanden ist. In dem ersten bevorzugten Ausführungsbeispiel sind sechs Segmentblöcke 75 pro ASIC vorgesehen, die jeweils die Multiplexer 78a und 78b enthalten, sowie den UP/DOWN-Zähler 79 und das 2-Bit-FEPA-Register 76. Der Segmentblock 75 teilt jeden ASIC (Treiber-IC) in 6 FEPA-Abschnitte (wobei 16 LED-Elemente jedem Segment zugeordnet sind), kann aber leicht an jede Größe pro LED angepasst werden, einschließlich einer 1:1-Zuordnung. Die Verriegelungssignale intLatch0z, intLatch1z, intLatch2z und intLatch3z aus den Schaltblöcken 77a und 77b werden in den 4:1-Multiplexer 78a eingegeben. Die Signale intEclk0z, intEclklz, intEclk2z und intEclk3z aus den Schaltblöcken 77c und 77d werden in den 4:1-Multiplexer 78b eingegeben. Das 2-Bit-FEPA-Register 76 in Segmentblock 75 wird an die Multiplexer 78a und 78b angelegt, um eine bestimmte Verzögerungswahl für die Verriegelungs- und Taktsignale zu ermöglichen, nämlich entweder delay0, delay1, delay2 oder delay3. Das 2-Bit FEPA-Register 76 übernimmt die Wahl für die Multiplexer 78a und 78b. Das 2-Bit FEPA-Register 76 ist ein über 2-Bit-Software zugängliches Register (eines pro Segment), die bestimmt, welcher der *n* Werte für die verzögerten Signale ECLKz / LATCHz an jedes Element in dem Segmentblock zu senden ist. In dem besprochenen, bevorzugten Ausführungsbeispiel ist der Wert von *n* gleich 2. Die Software-Adressierbarkeit des 2-Bit FEPA-Registers 76 ist in dem bevorzugten Ausführungsbeispiel über JTAG-Leitungen vorgesehen. Das 2-Bit FEPA-Register 76 wird über die JTAG-Leitungen programmiert. Der in das 2-Bit-FEPA-Register gestellte Wert wird durch eine Abtasteinrichtung ermittelt, die die Y-Lage jeder LED misst. Aus diesen Daten werden per Software die nötigen 2-Bit-Nummern für den jeweiligen Druckkopf erzeugt. Der UP/DOWN-Zähler 79 ist ein 8-Bit-Zähler, der den Belichtungszyklus steuert. Das Signal DlyLatch setzt den UP/DOWN-Zähler zurück, wobei jede fallende Flanke des Signals Dlyclk den Zähler um eins inkrementiert/dekrementiert.

Fig. 8B zeigt den LED-Block 80, der Schaltungen auf dem Träger umfasst, die für jede der LEDs vorgesehen sind. Die Schaltungen und Signalbahnen, die auf "_x" enden, bezeichnen Schaltungen, die sich für jedes LED-Element wiederholen. Die eingehenden Belichtungsdaten werden in einem p-Bit-Latch 82 auf den Flanken des Signals ShftClk gespeichert. Der p-Bit-Latch ist die einzige im LED-Block 80 gezeigte Schaltung, die für den gesamten ASIC vorgesehen ist. Für jedes einzelne LED-Element sind die Belichtungsdaten in einem einzelnen p-Bit-Master-Register_x 83 auf der Flanke des TOKEN-Signals verriegelt, während die Daten für jede Linie geladen werden. Dies ist im Zeitablaufdiagramm in Fig. 8D 1 dargestellt. Für alle LED-Elemente sind die Daten in dem jeweiligen SlaveA Register_x 84 auf der Flanke des Signals Latch0z verriegelt. Daten vom SlaveA Register_x werden im SlaveB_x Register 85 auf der Flanke des verzögerten Latch-Signals (DlyLatch) verriegelt. Das Signal DlyLatch und ein entsprechend verzögertes Signal ECLK (DlyEclk) liegen gleichzeitig an der Belichtungsschaltung an. Die fallende Flanke des Signals DlyLatchz (das verzögerte Signal Latchz) überträgt die SlaveA-Daten an das SlaveB-Register und setzt die Belichtungsschaltung zurück. Hinweis: Die erste fallende Flanke des verzögerten Belichtungstaktsignals (DlyEclkz) startet die Belichtungsschaltung des Elements.

Das erste bevorzugte Ausführungsbeispiel der FEPA-Funktion ist darauf ausgelegt, die Schaltung zu reduzieren, die einzelnen ASICs auf dem LED-Träger zugeordnet ist. Dieser konstruktive Ansatz erfordert zusätzliche Schaltungswege durch den Druckkopf und ist Gegenstand des ersten bevorzugten Ausführungsbeispiels. Das erste bevorzugte Ausführungsbeispiel erzeugt eine gemeinsame Schaltung auf der Schnittstellenkarte, um die Anzahl der Schaltungen zu reduzieren, die in ASICs auf der Druckkopfkarte einzubeziehen sind. Dies wird in der vorliegenden Erfindung dadurch erreicht, indem die FEPA-Funktion mit der CEPA-Funktion kombiniert wird. Die FEPA-Konstruktion nach dem ersten bevorzugten Ausführungsbeispiel der Erfindung ist teilweise auf der Schnittstellenkarte angeordnet. Vorzugsweise befindet sich der Teil auf der Schnittstellenkarte, bei dem es sich um die Schaltung handelt, die mehrere Verzögerungen erzeugt, die jeweils zur Feinausrichtung eines Pixels vorgesehen sind. Jede der Verzögerungen stellt daher einen Bruchteil einer Liniendauer dar, um Pixel um einen äquivalenten Bruchteil eines Pixelabstands einzustellen. Die FEPA-Schaltung stellt *n* eindeutige, wählbare Verzögerungstaktzyklen bereit, die von dem eingehenden Belichtungstaktsignal abgeleitet sind, und stellt *n* eindeutige, wählbare Verriegelungssignale aus dem eingehenden Leitungsverriegelungssignal bereit. Die vorliegende Erfindung sieht insbesondere vor, dass die FEPA-Schaltung auf praktisch jede Auflösung einstellbar ist, indem einfach die Bit-Tiefe *n* geändert wird. Sowohl ECLK als auch MCLK werden aus demselben Hochfrequenztakt abgeleitet und dann miteinander synchronisiert. ECLK und MCLK basieren in dem bevorzugten Ausführungsbeispiel auf einem Takt von 60 MHz. MCLK ist von Anfang an 60 MHz, während ECLK 30 MHz oder weniger ist und sich während eines Belichtungszyklus in einer gegebenen Leitung ändert.

Fig. 14 ist ein Blockdiagramm zur Darstellung der von der Schnittstellenkarte 170 in dem zweiten bevorzugten Ausführungsbeispiel der Erfindung durchgeführten Funktionen. In dem zweiten bevorzugten Ausführungsbeispiel wird ein größerer FPGA verwendet als im ersten Ausführungsbeispiel, um einige Funktionen einzubeziehen, die durch einzelne Komponenten des ersten Ausführungsbeispiels wahrgenommen wurden. Funktionen, wie die CEPA-Funktion 173, die BIN-Tabellen 175 und sogar die Schnittstellensteuereinheit 178b zur Schreibeinheit, sind jetzt in dem FPGA 178a implementiert. Dies wird durch eine noch höhere Integration der FPGA-Bausteine möglich sowie durch die Anordnung der Speichereinrichtungen in diesen Bausteinen. Wie in Fig. 14 gezeigt, wird die CEPA-Funktion 173 auf der Schnittstellenkarte zum Druckkopf mithilfe von Werten durchgeführt, die für jedes der LED-Elemente gespeichert sind. Dieser Ansatz ermöglicht eine Anwendung der CEPA-Funktion auf jede Breite und auf praktisch jedes Format einer Belichtungsvorrichtung, z.B. binär (ein-aus) oder Graustufe (beliebige Bitgröße). Die CEPA-Funktion ist zudem auf jeden Elementabstand anwendbar (z.B. 300 dpi, 400 dpi, 600 dpi, 1200 dpi, ... usw.). Die zur Implementierung der CEPA-Funktion verwendete Hardware kann sich direkt auf der eigentlichen Schnittstellenkarte 170 befinden oder vorgelagert auf dem Weg der Bildverarbeitungselektronik. Sie kann in einem ASIC oder in einem FPGA durchgeführt werden oder in einer Kombination dieser beiden Bauteile oder in einem ähnlichen Baustein. In dem zweiten bevorzugten Ausführungsbeispiel enthält der FPGA 178a auf der Schnittstellenkarte den größten Teil der Schaltung für die Grobkorrektur, der sich auf der Schnittstellenkarte 170 befindet. Der SRAM 172 ist der Arbeitsspeicher für die Software zur Durchführung der notwendigen Operationen auf den Vorrichtungen der Schnittstellenkarte 170. Ein derartiger Bereich ist erforderlich, damit die Software bestimmte Operationen mit Daten und Daten-Arrays ausführen kann. Dieser Speicher ist ein flüchtiger Speicher, d.h. der Speicherinhalt geht verloren, sobald keine Spannung anliegt. Der serielle Hochgeschwindigkeitsempfänger 174 empfängt die Bilddaten von der (nicht gezeigten) Bildausgabekarte. Zur Speicherung spezifischer Daten für die Schreibeinrichtung dient das Flash Memory 176. Das Flash Memory ist in dem bevorzugten Ausführungsbeispiel ein nicht flüchtiger Speicher, damit der Inhalt auch bei nicht anliegender Spannung erhalten bleibt. Bei den Informationen im Flash Memory 176 handelt es sich um druckkopfspezifische Daten einer Transformationstabelle, um Daten für Druckkopfkalibrierung und Abtastung, um druckkopfspezifische CEPA/FEPA-Daten sowie um weitere druckkopfspezifische Daten. Diese druckkopfspezifischen Daten werden zu Anfang ermittelt und brauchen nicht erneut ermittelt zu werden. Ein wesentlicher Vorteil ist also, dass die Daten lokal gespeichert werden. Durch die lokale Speicherung entfällt die Notwendigkeit, druckkopfspezifische Dateien in einem anderen Bereich zu speichern, also üblicherweise auf einer Festplatte in dem Hauptgerät. Die Schnittstellensteuereinheit 178b zur Schreibeinrichtung ist der "Kopf' der Schnittstellenkarte 170 und ermöglicht dem Druckkopf die Durchführung notwendiger Einrichtungsprozeduren, und zwar ohne Unterstützung durch andere Steuereinheiten oder Prozessoren, die üblicherweise in dem Hauptgerät angeordnet sind. Dies ist gegenüber Konstruktionen nach dem Stand der Technik ein wesentlicher Vorteil, weil alle Druckkopfoperationen in dem eigentlichen Druckkopf durchgeführt werden, wodurch der Druckkopf in hohem Maße eigenständig wird. Die Implementierung der Schnittstellensteuereinheit 178b kann entweder über eine diskrete Mikrosteuerung erfolgen oder durch moderne FPGA-Architekturen, die eine Anordnung der gesamten Schnittstellensteuereinheit 178b in dem FPGA 178a auf der Schnittstellenkarte 170 ermöglichen. Zur Verbesserung der Bildqualität dient das neue RTL-Merkmal 179 (Re-Transmit Line). Im Falle eines Übertragungsfehlers auf der seriellen Hochgeschwindigkeitsverbindung für die Bilddaten erkennt die RTL-Schaltung den Fehler, verwirft sämtliche Bildliniendaten und ersetzt die verworfenen Daten mit den vorherigen Bildliniendaten. Die RTL-Schaltung 179 verhindert somit eine Belichtung des Prints mit den fehlerhaften Bilddaten. Fehlerhafte Daten können durch elektromagnetische Abstrahlung oder elektrostatische Entladung sowie durch Spannungsschwankungen in der Stromversorgung entstehen. Die Korrekturtabellen (COR) 171 enthalten die Korrekturmerkmale für die Schreibeinheit in einer Weise, die im Wesentlichen dem Stand der Technik entspricht. Die Einbeziehung der Korrekturtabellen 171 auf der Schnittstellenkarte 170 stellt jedoch einen Vorteil der vorliegenden Erfindung dar. Üblicherweise sind die Korrekturtabellen früher in dem Bildverarbeitungspfad angeordnet. Der Segmentierter/LED-Treiber-IC (SEG) 178c formatiert und synchronisiert die Daten für den Treiber-IC-Datenbus. Die Druckkopf-Helligkeitstabellen (BIN) 175 enthalten das Korrekturmerkmal für die Helligkeit der Schreibeinheit in einer Weise, die nach dem Stand der Technik bekannt ist. Auf der Schnittstellenkarte 170 strömen die Daten durch die CEPA-Schaltung 173 in einer Weise, die mit der FIFO-Technik vergleichbar ist. Die CEPA-Schaltung 173 ist eine von vielen Funktionen, die in dem FPGA 178a enthalten sind. In Fig. 14 ist die CEPA-Schaltung 173 in Reihe mit der Korrekturtabelle (COR) 171 angeordnet. Die CEPA-korrigierten Bilddaten werden dann an die Korrekturtabelle übergeben. Alle Daten durchlaufen nacheinander die elektronische Druckkopf-Grobausrichtung (CEPA) 173 sowie die Transformationen in den Korrekturtabellen 171. Die Druckkopf-Helligkeitstabellen 175 laufen parallel zu den Korrekturtabellen 171. Die Daten aus den Druckkopf-Helligkeitstabellen 175 steuern eine Hälfte der Korrekturtabellen 171 an, indem sie die Eingabe für die LED-spezifische Helligkeitserkennung liefern, so dass die entsprechende Korrektur erfolgen kann. Die korrigierten CEPA-Daten steuern die andere Hälfte der Korrekturtabellen 171 an.

Die in dem bevorzugten Ausführungsbeispiel gezeigte CEPA-Funktion 173 ist in dem FPGA 68a ausgebildet und verhält sich ähnlich wie eine FIFO-Operation. Dies ist möglich, indem der FPGA 178a sowohl Logik- als auch Speicherelemente bereitstellt, um eine FIFO-gestützte Schaltung zu erzeugen. Eine Architektur könnte zudem diskrete FIFO-Komponenten verwenden oder die CEPA-Funktion 173 in einem individuellen VHDL-Code (Hardware Description Language) in dem FPGA 178a implementieren. Die CEPA-Funktion 173 ist zudem mit VHDL-Code in Verbindung mit einem SRAM-Speicherbaustein implementierbar. Darüber hinaus sind zahlreiche weitere Konfigurationen denkbar, wie für Fachleute selbstverständlich erkennbar sein wird.

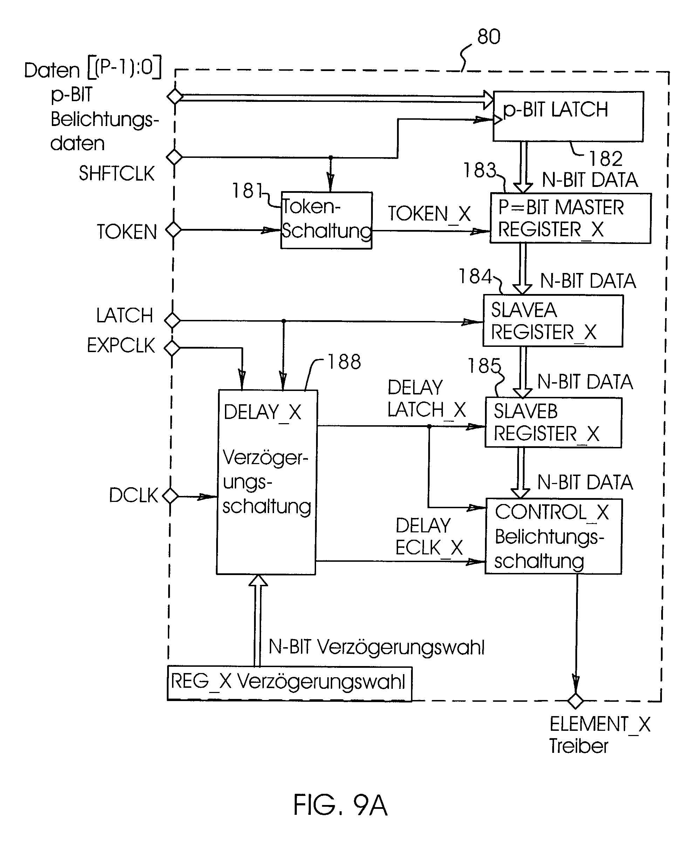

Wie in Fig. 9a gezeigt, bei der es sich um ein schematisches Blockdiagramm des FEPA-Blockdiagramms nach dem zweiten bevorzugten Ausführungsbeispiel der vorliegenden Erfindung handelt, lässt sich ein einzelnes LED-Element in zwei grundlegende Bereiche unterteilen. Der erste Bereich umfasst Schaltungen, die mehreren LED-Elementen zugeordnet sind. Der zweite Bereich umfasst die Schaltungen, die einzelnen LED-Elementen zugeordnet sind. Die Schaltungen und Signalbahnen, die auf "_x" enden, bezeichnen Schaltungen, die sich für jedes LED-Element wiederholen. Die eingehenden Belichtungsdaten werden in einem p-Bit-Latch 182 auf den Flanken des Signals SHFTCLK gespeichert. Für jedes einzelne LED-Element sind die Belichtungsdaten auf dem p-Bit-Latch 182 in einem einzelnen p-Bit-Master-Register_x 183 auf der Flanke des TOKEN-Signals während des Datenladevorgangs verriegelt. Für alle LED-Elemente sind die Daten in dem jeweiligen SlaveA Register_x 184 auf der Flanke des Latch-Signals verriegelt. Daten vom SlaveA Register_x 184 werden im SlaveB_x Register 185 auf der Flanke des verzögerten Latch-Signals (DELAYLATCH_X) verriegelt.

SHFTCLK, TOKEN und LATCH sind Zeitsteuerungssignale, um Daten in die Treiber-ASICs der Schreibeinheit zu laden.

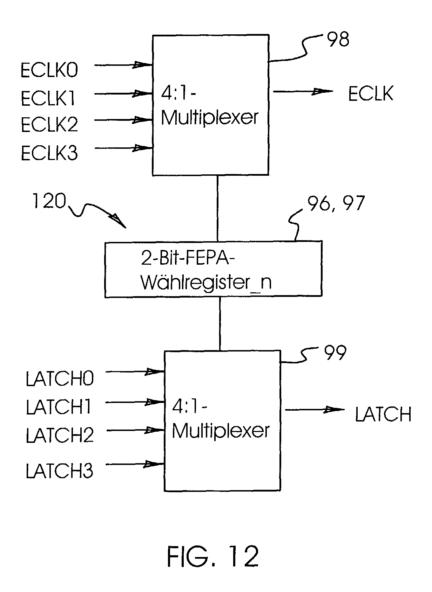

Das Signal DELAYLATCH_X und ein entsprechend verzögertes Signal ECLK (DELAYECLK_X) liegen gleichzeitig an den Belichtungsschaltkreisen an. Die vorausgehende Erläuterung in Bezug auf Fig. 9a bezieht sich auf eine FEPA-Schaltung für ein einzelnes LED-Element. Die Ableitung des Signals DELAYLATCH_X und des entsprechenden Signals DELAYECLK _X aus Fig. 9a ist deutlicher in Fig. 9B1 und Fig. 12 zu sehen.

Fig. 9B ist ein Blockdiagramm der Verzögerungsschaltung 188 aus Fig. 9a. Wie in FIG. 9B zu sehen ist, sind bis zu *n* Verzögerungen zwecks Feineinstellung jedes LED-Treibers verfügbar. Das Mastersignal ECLK 93 liegt an einem Satz von *n* Verzögerungsschaltungen 92 an, und das Signal LATCHz 91 liegt an einem anderen Satz von identischen Verzögerungsschaltungen 94 an. Die Verzögerungsschaltungen 92, 94 erzeugen dann *n* verzögerte ECLKs-Signale, und *n* verzögerte LATCH-Signale gehen dann zum jeweiligen (1 von *n*) MUX 98, 99 mit den jeweiligen Auswahlregistern 96, 97. Wie in Fig. 12 deutlich zu erkennen ist, sind zwei Multiplexer in dem bevorzugten Ausführungsbeispiel vorhanden, wobei *n* gleich 3 als Ergebnis einen 2-Bit-Wertes ist, der zur Darstellung von *n* in dem Verzögerungswahlregister dient. Das per Software zugängliche Register (eines pro Element) wählt aus, welcher *n* Verzögerungswert (Anzahl von Dclk-Verzögerungen) des eingehenden ECLKz-Signals zu verwenden ist, sowie das entsprechende Signal LATCHz, das für das jeweilige Element zu verwenden ist. Nach dem bevorzugten Ausführungsbeispiel der vorliegenden Erfindung umfasst jeder LED-Treiber die in Fig. 12 gezeigte Schaltung, die eine der Verzögerungen als verzögertes Signal LATCH_x oder ECLK_x auswählt, wie in Fig. 9a gezeigt.

Fig. 10 ist ein Signalzeitablaufdiagramm für die in Fig. 9a gezeigte FEPA-Schaltung. Zur fallenden Flanke von TOKENz werden Elementdaten in die Masterregister auf den Flanken des Signals TOKEN_x geladen. Die fallende Flanke von LATCHz überträgt die Daten aus dem Masterregister in ALLE SlaveA-Register gleichzeitig (jedes Element enthält ein eindeutiges SlaveA-Register). Signal ECLKz und LATCHz speisen jeweils einen n-Verzögerungsblock. Die über n-Bit-Software zugänglichen Register (eines pro Element) bestimmen, welcher *n* Wert der verzögerten Signale ECLKz / LATCHz für jedes Element zu verwenden ist. Die fallende Flanke des Signals DELAYLATCHz (das verzögerte Signal LATCHz) überträgt die SlaveA-Daten an das SlaveB-Register und setzt die Belichtungsschaltung zurück. Hinweis: Die erste fallende Flanke des verzögerten Belichtungstaktsignals (DELAYECLKz) startet die Belichtungsschaltung des Elements.

Es ist wünschenswert, die Gesamtzahl der Verbindungen zu reduzieren, die vom System benötigt werden, um die FEPA-Funktion zu implementieren, was gleichzeitig den konstruktiven Ansatz darstellt, der von dem zweiten bevorzugten Ausführungsbeispiel der Erfindung verfolgt wird. Die Reduzierung der Verbindungszahl ist wichtig, weil die räumliche Konfigurationen von Druckköpfen aufgrund der Forderung nach höherer Auflösung und Qualität immer härteren Bedingungen unterliegen. Die Signalbahnen auf einem Druckkopf nehmen Raum in Anspruch und müssen zu vielen oder allen Treiberschaltungen geführt werden, die jedes der LED-Elemente bedienen. Durch die Verringerung der Anzahl von Signalbahnen lässt sich eine wirtschaftlichere Herstellung verwirklichen. Dies sieht die vorliegende Erfindung vor, indem die Konstruktion der elektronischen Druckkopf-Feinausrichtung (FEPA) in Verbindung mit der Konstruktion der elektronischen Druckkopf-Grobausrichtung (CEPA) vorgenommen wird. Die hier beschriebene FEPA-Konstruktion stellt *n* eindeutige, wählbare Verzögerungstaktzyklen bereit, die von dem eingehenden Belichtungstaktsignal abgeleitet sind, und stellt *n* eindeutige, wählbare Verriegelungssignale aus dem eingehenden Leitungsverriegelungssignal bereit. Die vorliegende Erfindung sieht insbesondere vor, dass die FEPA-Konstruktion auf praktisch jede Auflösung einstellbar ist, indem einfach die Bit-Tiefe *n* geändert wird. Sowohl ECLK als auch DCLK werden aus demselben Hochfrequenztakt abgeleitet und dann miteinander synchronisiert. ECLK und DCLK basieren in dem bevorzugten Ausführungsbeispiel auf einem Takt von 30 MHz. DCLK ist von Anfang an 30 MHz, während ECLK 30 MHz oder weniger ist und sich während eines Belichtungszyklus in einer gegebenen Leitung ändert.

Damit die FEPA-Schaltung wirksam ist, muss jedes LED-Element eine Datenbelichtungs-Startzeit haben, die in Bruchteilen eines ganzen Linieninkrements verzögerbar ist, um eine Feinabstandseinstellung zur Platzierung der LED-Elemente während der Belichtung zu ermöglichen. Der Verzögerungstakt (DCLK) ist eine feste Taktreferenz für die eindeutigen festen Verzögerungen. Die Taktfrequenz lässt sich ändern, um jedes gewünschte Verzögerungsinkrement zu erzeugen. Es sei darauf hingewiesen, dass in Fig. 7b T=1 DCLK-Periode ist. In dem bevorzugten Ausführungsbeispiel gibt es die vier Verzögerungen 0, 1, 2 und 3. Allerdings sind in einer FEPA-Schaltungskonstruktion viel mehr Verzögerungen verwendbar, indem mehr Bits in der Verzögerungsschaltung zugelassen werden, die die Verzögerungstakte erzeugen. Die Größe des über *n* -Bit-Software zugänglichen Registers müsste zudem wachsen, weil mit einer zunehmenden Anzahl von Verzögerungen der Wert für *n* größer werden muss, der verwendet wird, um 1 von *n* Verzögerungswahlen für jedes LED-Element zu erzielen. Das Register kann so ausgelegt werden, dass es mit dem Eingabedatenbus geladen wird. Das Register kann für Prüfungszwecke JTAG-kompatibel ausgelegt werden, was es ermöglichen würde, das Register von der seriellen JTAG-Datenbahn zu laden.

Die erfindungsgemäße FEPA-Funktion ist auf jede LED-Elementbreite anwendbar, die in der Belichtungsvorrichtung zu Einsatz kommt. Dieser konstruktive erfindungsgemäße Ansatz ermöglicht eine Anpassung der FEPA-Funktion an jedes Format einer Belichtungsvorrichtung, z.B. binär (ein-aus) oder Graustufe (beliebige Bitgröße) und ist zudem auf jeden Elementabstand anwendbar (z.B. 300 dpi, 400 dpi, 600 dpi, 1200 dpi, ... usw.).

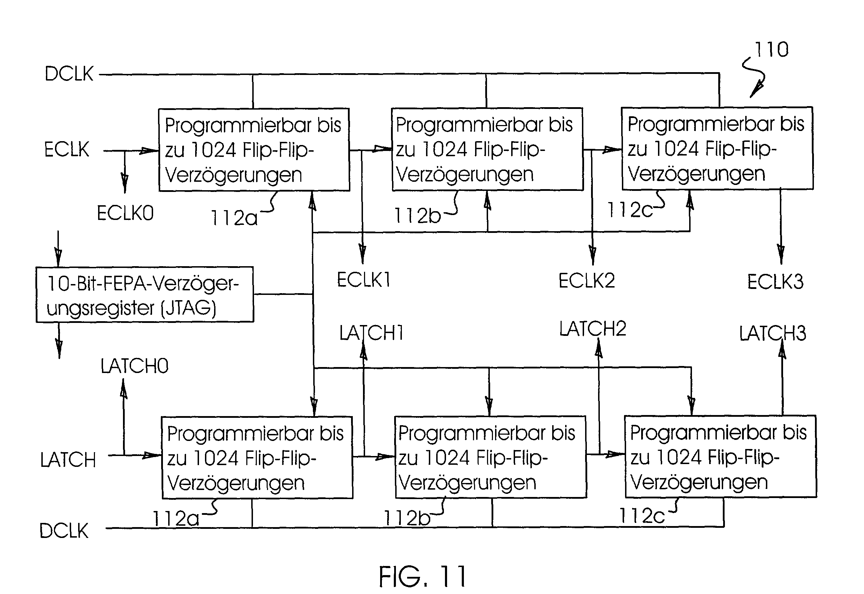

Fig. 11 ist ein Blockdiagramm der FEPA-Schaltung pro LED 110, das von dem zweiten Ausführungsbeispiel der vorliegenden Erfindung für jedes LED-Element verwendet wird. In dem zweiten bevorzugten Ausführungsbeispiel stellt jeder Treiber die Schaltung bereit, die für 96 LED-Elemente notwenig ist, wobei es in dem bevorzugten Ausführungsbeispiel insgesamt 112 Treiber oder ASICs gibt. In dem bevorzugten Ausführungsbeispiel stellt jeder ASIC-Treiber die FEPA-Schaltung bereit, die notwendig ist, um die Belichtungsperioden für jedes der 96 LED-Elemente eindeutig zu steuern. In Fig. 11 durchlaufen die Signale ECLK und LATCH drei Verzögerungsschaltungen 112a, 112b, 112c, die in dem bevorzugten Ausführungsbeispiel drei separate Verzögerungsblöcke umfassen. Dadurch werden drei verzögerte Versionen der Signale ECLK und LATCH erzeugt. Daraus ergeben sich jeweils vier Auswahlmöglichkeiten: 1) keine Verzögerung; 2) 25% Linienverzögerung; 3) 50% Linienverzögerung oder 4) 75% Linienverzögerung. Die 2-Bit-FEPA-Auswahlregister (eines pro LED) werden benutzt, um eine der vier möglichen Verzögerungswahlen zu treffen. Ein zusammengebauter Druckkopf wird einer Abtastoperation unterzogen, um die für jedes Element benötigte Unterpixel-Verzögerung zu ermitteln. Das 10-Bit-FEPA-Verzögerungsregister wird benutzt, um jeden Verzögerungsblock auf ca. 25% der Verarbeitungslinienzeit einzustellen. Indem dieses Register zu einem JTAG-zugänglichen Register gemacht wird, lassen sich die Verzögerungszeiten auf jede Verarbeitungsdruckgeschwindigkeit einstellen.

Wie weiter in Fig. 11 gezeigt, werden in dem zweiten Ausführungsbeispiel die ECLK- und LATCH-Signale mit drei Verzögerungsschaltungen 112a, 112b und 112c bereitgestellt, was vier Versionen jedes Signals ergibt, die um jeweils 25% versetzt sind. Auf ähnliche Weise wie für das erste Ausführungsbeispiel beschrieben, können die Verzögerungsschaltungen durch Erhöhen der Taktfrequenz für die Flip-Flops in den Verzögerungsschaltungen 112a, 112b und 112c erneute Verzögerungen erzeugen, so dass die erste Verzögerungsschaltung 112a auch als vierte Verzögerungsschaltung 112a, die siebte Verzögerungsschaltung 112a usw. dienen kann. Die zweite Verzögerungsschaltung 112b würde auch als fünfte Verzögerungsschaltung 112b dienen, die achte Verzögerungsschaltung 112b und die dritte Verzögerungsschaltung 112c könnten auch als sechste Verzögerungsschaltung 112c und als neunte Verzögerungsschaltung 112c dienen. Hier würden die Signale select1 und select2 die Verwendung des jeweiligen Verzögerungssignals steuern. Das 11-Bit-FEPA-Verzögerungsregister könnte die Anzahl der Takte in jeder der Verzögerungsschaltungen 112a, 112b und 112c steuern. Die Auflösung könnte von 25% (1/4) einer Line auf 17,5% (1/7) einer Linie und sogar auf 10% (1/10) einer Linie erhöht werden. Es ist zudem vorgesehen, anstatt drei Verzögerungsschaltungen 112a, 112b und 112c für jedes Signal ECLK und LATCH nur zwei Schaltungen zu verwenden und wiederzuverwenden, wie zuvor besprochen. Eine derartige Konstruktion könnte eine FEPA-Auflösung von 20% (1/5) einer Linie ergeben, und zwar mithilfe einer Konstruktion, die weniger Schaltungsaufwand erfordert, und die Verzögerungen erzeugt, die zur Erzeugung weiterer Verzögerungen wiederverwendbar ist.

Fig. 12 ist ein detailliertes Blockdiagramm der je LED-Element basierenden Schaltung 120, die dazu dient, die Pixeldaten derart einzustellen, dass die Ausgabe der LED-Elemente bis auf Bruchteile einer einzelnen Linie linear ist. Die Multiplexer 98, 99 entsprechen denen in Fig. 9 gezeigten, werden jedoch hier detaillierter dargestellt. Wie in Fig. 12 zu erkennen ist, können die Wählregister 96, 97 ein einzelnes Register sein, wie im Falle des bevorzugten Ausführungsbeispiels. Obwohl die Wählregister 96, 97 in der Darstellung in Fig. 12 2 Bits enthalten, können die Wählregister 96, 97 und die Multiplexer 98, 99 auch so konfiguriert sein, dass sie in anderen Ausführungsbeispielen wesentlich mehr Verzögerungen ermöglichen.

Die vorliegende Erfindung unterscheidet sich von dem Ansatz in US 5,585,836, weil US 5,585,836 zwei Belichtungstakteingänge (von 1 bis 3) benötigt und zudem einen Latch-Eingang (von 1 bis 2), wodurch sich insgesamt drei Kontakte pro Teiber-IC ergeben. Die FEPA-Funktion gemäß der vorliegenden Erfindung verwendet nur einen DCLK-Kontakt pro Treiber. Um einen Druckkopf mit denselben LED-Elementen herzustellen, würden nach US 5,585,836 drei Schaltungsbahnen x 112 ICs oder 336 Schaltungsbahnen und entsprechend 336 Drahtverbindungen erforderlich sein. Die erfindungsgemäße Konstruktion erfordert 112 dieser Schaltungsbahnen und Drahtverbindungen, was eine Reduzierung um 224 Schaltungen mit 224 zugehörigen Drahtverbindungen bedeutet. Die vorliegende Erfindung erfordert weiterhin einen Komparator, jedoch nur 1 und nicht 3 pro LED, wie in US 5,585,836. Auch ein Multiplexer ist weiterhin erforderlich, jedoch nur einer pro LED.

Um die FEPA-Funktion zu implementieren, benötigt die vorliegende Erfindung einen Satz von Zeitverzögerungen (für den Master-Belichtungstakt und die Verriegelung, die von dem Delay-Referenztakt zeitlich gesteuert werden) pro Treiber und ein *n*-Bit-Latch und Multiplexer pro Element, wenn die FEPA-Funktion je LED-Element implementiert ist. Dadurch ergeben sich erhebliche Raumvorteile, weil pro Element nur ein Komparatorensatz (einer pro Verzögerungs-Belichtungstaktsatz) und ein Multiplexer und Latch erforderlich ist. Wenn die vorliegende Erfindung mit einer elektronischen Krümmungskorrektur auf Segmentebene implementiert wird (etwa Gruppen von 2, 4, 8, 16 Elementen), dann wäre nur die Zeitverzögerung pro Treiber, ein Register und ein Multiplexer pro Segment erforderlich, was zu weiteren Einsparungen in Bezug auf die IC-Treiberkosten führen würde. Ähnliche Verfahren lassen sich für die FEPA-Funktion auf Pro-Treiber-Basis verwenden, so dass die Belichtung nicht auf gleiche Weise auf Pro-Treiber-Basis zentriert werden muss, um die Krümmung zu korrigieren. Dieser Ansatz ist im binären Druck sowie im mehrstufigen Druck verwendbar, wie hier gezeigt wird.

Die vorliegende Erfindung beschreibt einen Druckkopf für elektrofotografisches Drucken, worin LEDs von ungerader und gerader Seite gleichzeitig ansteuerbar sind. Sowohl die ungeraden als auch die geraden Elemente werden parallel belichtet. Die erfindungsgemäße FEPA-Architektur ist in der Lage, diese Architektur für eine halbstufige Feinsteuerung zu nutzen. Indem die Verzögerungen derart eingestellt werden, dass die elektronische Positionierung der ungeraden und geraden Pixel zueinander jeweils oberhalb und unterhalb versetzt erfolgt, ist ein Einstellungsgrad erzielbar, der eine Auflösung erzeugt, die in der Wahrnehmung wesentlich höher erscheint. So lässt sich eine halbe Stufe oder eine Stufe zwischen den 1/4-Inkrementen erzielen, indem die ungeraden und geraden Pixel zueinander versetzt werden. Dadurch werden praktisch doppelt so viele FEPA-Korrekturstufen einer steuerbaren Verschiebung erzeugt, was die Bildqualität weiter verbessert.

In dem ersten oder zweiten bevorzugten und zuvor besprochenen Ausführungsbeispiel sowie in jeglichen Ausführungsbeispielen, die mehrere LED-Reihen verwenden, kann das Versetzen von Pixeln in verschiedenen Reihen um unterschiedliche Beträge zu einer Darstellung führen, die so erscheint, als ob es mehr Verzögerungen gäbe oder als ob es Verzögerungen gäbe, die auf kleineren Bruchteilen basieren. Fig. 13a ist ein Diagramm zur Darstellung der ungeraden und geraden Pixel, die in idealer Weise um denselben Betrag auf einer perfekten Linie verschoben sind.

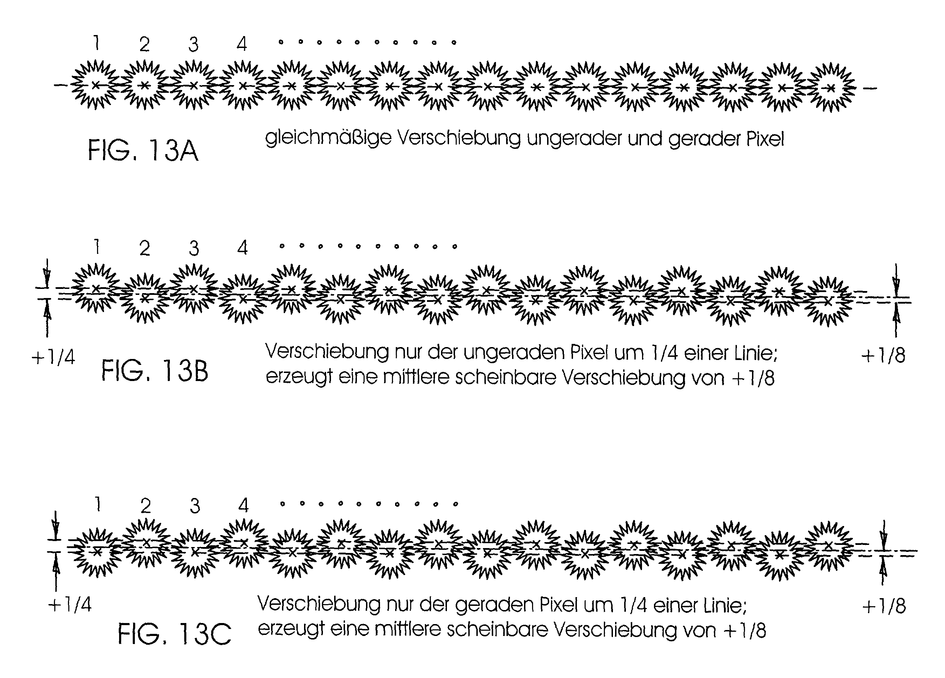

Fig. 13b ist ein Diagramm zur Darstellung des Versatzes ungerader Pixel durch Verschieben der ungeraden Pixel um 1/4 Linie und durch nicht Verschieben der geraden Pixel, was zur Darstellung eines Systems führt, das in der Lage ist, Pixel um 1/8 Linie zu verschieben. Die damit erstrebte Darstellung ist in Fig. 13a gezeigt.

Fig. 13c ist ein Diagramm, das dem aus Fig. 13b ähnlich ist, wobei nur die geraden Pixel um 1/4 Linie verschoben werden, ohne die ungeraden Pixel zu verschieben, was zur Darstellung eines Systems führt, das in der Lage ist, Pixel um 1/8 Linie zu verschieben. Die damit erstrebte Darstellung ist in Fig. 13a gezeigt.

Obwohl die Erfindung mit besonderem Bezug auf bevorzugte Ausführungsbeispiele beschrieben wurde, ist die Erfindung nicht darauf beschränkt, sondern es können innerhalb des Schutzbereichs der nachstehenden Ansprüche Änderungen und Abwandlungen vorgenommen werden.

### Bezugszeichen

- 1: Schreibeinrichtung
- 2: Bildempfangselement
- 4: Schnittstellenkarte
- 7: Trägerbaugruppe
- 12: Krümmungseffekt
- 14: Belichtungsebene
- 22: Krümmungseffekte
- 24: Belichtungsebene
- 32: LED-Elemente
- 33: korrigierte Pixel
- 60: Schnittstellenkarte
- 62: SRAM
- 64: serieller Hochgeschwindigkeitsempfänger
- 66: Flash Memory
- 68: FPGA
- 68a: Schnittstellensteuereinheit der Schreibeinrichtung
- 68c: Segmentierter/LED-Treiber-IC
- 70: Schaltungen
- 72: endgültige Pixel
- 73: Pixel
- 75: Segmentblock
- 76: FEPA-Register
- 77a: Schaltblock
- 77b: Schaltblock
- 77c: Schaltblock
- 77d: Schaltblock
- 78a: Multiplexer
- 78b: Multiplexer
- 79: UP/DOWN-Zähler
- 80: LED-Block
- 82: p-Bit-Latch
- 83: p-Bit-Master-Register_x
- 84: SlaveA Register_x
- 85: SlaveB Register_x
- 88b: SWIM/USB-Anschluss
- 91: LATCHz-Signal
- 92: Verzögerungsschaltung
- 93: ECLK-Signal
- 94: Verzögerungsschaltung
- 95: Wählregister
- 97: Wählregister
- 98: Multiplexer
- 99: Multiplexer
- 110: FEPA-Schaltung pro LED
- 112a: Verzögerungsschaltung
- 112b: Verzögerungsschaltung
- 112c: Verzögerungsschaltung
- 120: FEPA-Schaltung
- 130: Druckkopfträger
- 160: FEPA-Verzögerungsblock
- 162: FEPA-Verzögerungsregister
- 162a: Verzögerungsschaltung
- 162b: Verzögerungsschaltung
- 162c: Verzögerungsschaltung
- 163: CEPA-Schaltung
- 163a: Druckkopf-Krümmungskorrektur
- 165: BIN/COR-Tabellen
- 168a: Multiplexer
- 168b: Multiplexer
- 168c: Multiplexer
- 168d: Multiplexer
- 170: Schnittstellenkarte
- 171: Korrekturtabellen
- 172: SRAM
- 173: CEPA-Funktion
- 174: Hochgeschwindigkeitsempfänger
- 175: BIN-Tabellen
- 176: Flash Memory
- 178a: FPGA
- 178b: Schnittstellensteuereinheit
- 178c: Segmentierer
- 179: RTL-Merkmal
- 182: p-Bit-Latch
- 183: p-Bit-Master-Register_x
- 184: SlaveA register_x
- 185: SlaveB register_x
- 188: Verzögerungsschaltung

## Patentansprüche

1. Vorrichtung zur Krümmungskorrektur in einer linearen Anordnung von Elementen mit:
einer Trägerbaugruppe (7) mit einer Vielzahl von LED-Elementen (32), denen jeweils Treiber-Unterbaugruppen zugeordnet sind, wobei jedes der LED-Elemente (32) ein Pixel in einer Linie darstellt;
einer Schnittstellenkarte (60), die mit der Trägerbaugruppe (7) gekoppelt ist, wobei die Schnittstellenkarte (60) eine Schaltung umfasst, die Bilddaten für die LED-Elemente (32) verarbeitet;
einer Krümmungs-Grobkorrekturschaltung auf der Schnittstellenkarte (60), die die Pixel elektronisch anordnet, um die Linearität durch ganzzahlige Pixelabstände zu verbessern; und
einer Krümmungs-Feinkorrekturschaltung, die mindestens teilweise auf dem Träger (7) angeordnet ist, wobei die Feinkorrekturschaltung eine erste Schaltung vorsieht, die einer Vielzahl von Elementen gemeinsam ist, und eine zweite Schaltung, die einem bestimmten Element zugeordnet ist, wobei die zweite Schaltung eine Verzögerung aus einer Verzögerungsmenge auswählt, die die Linearität der Pixel innerhalb der Linie um einen Bruchteil eines Pixelabstands verbessert.

2. Vorrichtung nach Anspruch 1,
**dadurch gekennzeichnet,**
**dass** die Krümmungs-Feinkorrekturschaltung vollständig auf dem Träger (7) angeordnet ist.

3. Vorrichtung nach Anspruch 1,
**dadurch gekennzeichnet,**
**dass** die Krümmungs-Feinkorrekturschaltung mindestens teilweise auf der Schnittstellenkarte (60) angeordnet ist.

4. Vorrichtung nach Anspruch 3,
**dadurch gekennzeichnet,**
**dass** die Krümmungs-Feinkorrekturschaltung, die mindestens teilweise auf der Schnittstellenkarte (60) angeordnet ist, mindestens eine Schaltungsbahn vorsieht, die eine Vielzahl von Signalen zur Krümmungs-Feinkorrekturschaltung auf der Trägerbaugruppe (7) führt, wobei die Signale nicht gleichzeitig aktiv sind.

5. Vorrichtung nach einem der Ansprüche 1 bis 4,
**dadurch gekennzeichnet,**
**dass** die Krümmungs-Feinkorrekturschaltung folgendes zudem folgendes umfasst:
eine erste Schaltung, die den Verzögerungssatz für die Vielzahl von LED-Elementen (32) erzeugt; und
eine zweite Schaltung, die eine der Verzögerungen nach einem bestimmten Parameter für das LED-Element (32) auswählt.

6. Vorrichtung nach Anspruch 5,
**dadurch gekennzeichnet,**
**dass** der Parameter einen gespeicherten Wert umfasst, der eine der Verzögerungen auswählt.

7. Vorrichtung nach Anspruch 6,
**dadurch gekennzeichnet,**
**dass** sich der gespeicherte Wert in der Krümmungs-Feinkorrekturschaltung befindet und dass die Schaltung zudem mindestens einen Multiplexer und mindestens einen Latch pro LED-Element umfasst.

8. Vorrichtung nach einem der Ansprüche 1 bis 7,
**dadurch gekennzeichnet,**
**dass** die Vorrichtung zudem eine Verzögerungs-Wiederholungsschaltung aufweist, die eine Vielzahl von Verzögerungssätzen unter Verwendung der Verzögerungssätze erzeugt.

9. Vorrichtung nach einem der Ansprüche 1 bis 8,
**dadurch gekennzeichnet,**
**dass** die Krümmungs-Feinkorrekturschaltung auf einer Segmentebene implementiert ist, die aus einer der folgenden Gruppen auswählbar ist: 2, 4, 8 oder 16 LED-Elemente.

10. Vorrichtung nach einem der Ansprüche 1 bis 9,
**dadurch gekennzeichnet,**
**dass** die Schnittstellenkarte (60) zudem einen Satz von Druckkopf-Helligkeitstabellen (65) und einen Satz von Druckkopf-Korrekturtabellen auf der Schnittstellenkarte (60) umfasst.

11. Vorrichtung nach einem der Ansprüche 1 bis 10,
**dadurch gekennzeichnet,**
**dass** die LED-Elemente (32) in einer Vielzahl von Reihen angeordnet sind, und weiterhin **dadurch gekennzeichnet, dass** die zweite Schaltung unterschiedliche Verzögerungen für unterschiedliche Reihen auswählt.

12. Vorrichtung nach Anspruch 11,
**dadurch gekennzeichnet,**
**dass** die Vielzahl von Reihen zudem eine ungerade Reihe und eine gerade Reihe umfasst, und dass die zweite Schaltung Verzögerungen auswählt, die um eine Verzögerung zwischen der ungeraden Reihe und der geraden Reihe versetzt sind.

13. Elektronisches Krümmungskorrekturverfahren mit folgenden Schritten:
Bereitstellen einer linearen Anordnung von Elementen auf einer Trägerbaugruppe (7) mit einem idealen Linearitätsgrad, wobei jedes der Elemente Pixel mit einem vorbestimmten Pixelabstand darstellt, und Zeitsteuerungsmitteln zum Belichten der Elemente für eine einzelne Linienzeitdauer, wobei die Trägerbaugruppe (7) mit einer Schnittstellenkarte (60) verbunden ist, die die Bildverarbeitungselektronik für die Vielzahl der Elemente auf der Trägerbaugruppe (7) bereitstellt;
Erzeugen einer ersten Schaltung, die die Vielzahl der Elemente innerhalb des einzelnen Pixelabstands des idealen Linearitätsgrads platziert;
Ausbilden einer zweiten Schaltung, die eine Vielzahl von Verzögerungen umfasst, die jeweils ein Bruchteil des einzelnen Pixelabstands sind, und Mitteln zum Auswählen einer der Verzögerungen zum Anlegen an die Zeitsteuerungsmittel gemäß einem vorbestimmten Parameter; und
Platzieren des Parameters in den Auswahlmitteln.

14. Elektronisches Krümmungskorrekturverfahren nach Anspruch 13,
**dadurch gekennzeichnet,**
**dass** die Auswahlmittel zudem ein Register (76) und einen Multiplexer (78) umfassen, die derart konfiguriert sind, um eine der Verzögerungen für die Zeitsteuerungsmittel gemäß dem vorbestimmten Parameter auszuwählen.

15. Elektronisches Krümmungskorrekturverfahren nach einem der Ansprüche 13 bis 14,
**dadurch gekennzeichnet,**
**dass** der Ausbildungsschritt zudem das Ausbilden von Auswählmitteln umfasst, die ein per Software zugängliches Register umfassen.

16. Elektronisches Krümmungskorrekturverfahren nach Anspruch 15,
**dadurch gekennzeichnet,**
**dass** der Ausbildungsschritt zudem das Ausbilden des per Software zugänglichen Registers derart umfasst, dass dieses über eine serielle JTAG-Datenbahn ladbar ist.

17. Elektronisches Krümmungskorrekturverfahren nach einem der Ansprüche 13 bis 16,
**dadurch gekennzeichnet,**
**dass** der Ausbildungsschritt zudem das Ausbilden der zweiten Schaltung mit einem Verzögerungstakt mit einer feststehenden Taktreferenz für eindeutige, feste Verzögerungen umfasst, wobei der Verzögerungstakt eine Frequenz besitzt, die zum Erzeugen unterschiedlicher Verzögerungsinkremente änderbar ist.

18. Elektronisches Krümmungskorrekturverfahren nach Anspruch 17,
**dadurch gekennzeichnet,**
**dass** der Ausbildungsschritt zudem das Ausbilden der zweiten Schaltung umfasst, die eine Verzögerungs-Wiederholfunktion aufweist, die es ermöglicht, jede der Verzögerungen mehrfach zu verwenden, um die Anzahl der innerhalb einer Linienzeit verfügbaren Verzögerungen zu erhöhen.

19. Elektronisches Krümmungskorrekturverfahren nach einem der Ansprüche 13 bis 18,
**dadurch gekennzeichnet,**
**dass** der Schritt zum Ausbilden der zweiten Schaltung zudem das Ausbilden der zweiten Schaltung derart umfasst, dass diese mindestens teilweise auf der Schnittstellenkarte (60) angeordnet ist, und dass der Teil der zweiten Schaltung, der auf der Schnittstellenkarte (60) ausgebildet ist, mindestens eine Schaltungsbahn vorsieht, die eine Vielzahl von Signalen zu dem zweiten Schaltungsteil führt, der auf dem Träger angeordnet ist, wobei die Signale nicht gleichzeitig aktiv sind.

20. Elektronisches Krümmungskorrekturverfahren nach einem der Ansprüche 13 bis 19,
**dadurch gekennzeichnet,**
**dass** der Schritt zum Bereitstellen zudem das Bereitstellen der Elemente umfasst, die in einer Vielzahl von Reihen angeordnet sind, wobei der vorbestimmte Parameter unterschiedliche Verzögerungen für unterschiedliche Reihen auswählt.

21. Elektronisches Krümmungskorrekturverfahren nach Anspruch 20,
**dadurch gekennzeichnet,**
**dass** die Vielzahl von Reihen zudem eine ungerade Reihe und eine gerade Reihe umfasst, und dass der vorbestimmte Parameter Verzögerungen wählt, die zwischen der ungeraden Reihe und der geraden Reihe versetzt sind.

22. Elektronische Druckvorrichtung mit einer Pixelausrichtungsschaltung, die durch folgende Schritte bestimmt ist:
Bereitstellen einer Trägerbaugruppe (7) mit einer Vielzahl von Druckelementen mit zugehöriger Treiberschaltung, die mit einer Schnittstellenkarte (60) verbunden ist, sowie von Zeitsteuerungsmitteln zum wahlweisen Belichten jedes der Druckelemente für eine Linienzeit;
Erzeugen einer Grobausrichtungsschaltung auf der Schnittstellenkarte (60), wobei die Grobausrichtungsschaltung eine Schaltung umfasst, die Pixeldaten in ganzen Anzahlen von Linienzeiten ausrichtet.
Ausbilden einer Feineinstellungsschaltung, die mindestens teilweise auf der Trägerbaugruppe (7) angeordnet ist, wobei die Feineinstellungsschaltung eine Vielzahl von Verzögerungen für jedes der Elemente vorsieht, und wobei jede der Verzögerungen ein Bruchteil einer Belichtungszeit der Zeitsteuerungsmittel ist; und
Auswählen einer der Verzögerungen gemäß einem vorbestimmten Parameter.

23. Elektronische Druckvorrichtung nach Anspruch 22,
**dadurch gekennzeichnet,**
**dass** der Ausbildungsschritt zudem das Ausbilden einer Feineinstellungsschaltung mit einem per Software zugänglichen Register zur Wahl der Verzögerung für jedes Element umfasst.

24. Elektronische Druckvorrichtung nach einem der Ansprüche 22 bis 23,
**dadurch gekennzeichnet,**
**dass** der Ausbildungsschritt zudem das Ausbilden der Feineinstellungsschaltung umfasst, und dass das per Software zugängliche Register über eine serielle JTAG-Datenbahn ladbar ist.

25. Elektronische Druckvorrichtung nach Anspruch 24,
**dadurch gekennzeichnet,**
**dass** der Ausbildungsschritt zudem das Ausbilden der Feineinstellungsschaltung umfasst, und dass ein Verzögerungstakt eine feststehende Taktreferenz für eindeutige, feste Verzögerungen umfasst, wobei der Verzögerungstakt eine Frequenz besitzt, die zum Erzeugen unterschiedlicher Verzögerungsinkremente änderbar ist.

26. Elektronische Druckvorrichtung nach einem der Ansprüche 22 bis 25,
**dadurch gekennzeichnet,**
**dass** der Ausbildungsschritt zudem das Ausbilden der Feineinstellungsschaltung umfasst, und dass die Vielzahl der Verzögerungen modifizierbar ist, um unterschiedliche Stufen einer Pixelfeineinstellung zu ermöglichen.

27. Elektronische Druckvorrichtung nach einem der Ansprüche 22 bis 26,
**dadurch gekennzeichnet,**
**dass** der Schritt zum Ausbilden der Feineinstellungsschaltung die Feineinstellungsschaltung derart ausbildet, dass sich diese mindestens teilweise auf der Schnittstellenkarte (60) befindet und mindestens eine Schaltungsbahn vorsieht, die eine Vielzahl von Signalen zu der Feineinstellungsschaltung auf der Trägerbaugruppe (7) führt, wobei die Signale nicht gleichzeitig aktiv sind.

28. Elektronische Druckvorrichtung nach einem der Ansprüche 22 bis 27,
**dadurch gekennzeichnet,**
**dass** der Schritt zum Auswählen zudem das Auswählen der Verzögerungen derart umfasst, dass die Verzögerungen in einer ersten Verzögerung wiederholt werden, wobei eine erste Verzögerung einer letzten Verzögerung folgt, die eine wiederholte Verzögerungsschaltung aus einer Vielzahl von Verzögerungen bildet.

29. Elektronische Druckvorrichtung nach einem der Ansprüche 22 bis 28,
**dadurch gekennzeichnet,**
**dass** der Schritt zum Bereitstellen zudem das Bereitstellen der Elemente umfasst, die in einer Vielzahl von Reihen angeordnet sind, und dadurch, dass die Feineinstellungsschaltung unterschiedliche Verzögerungen für unterschiedliche Reihen auswählt.

30. Elektronische Druckvorrichtung nach Anspruch 29,
**dadurch gekennzeichnet,**
**dass** der Schritt zum Bereitstellen zudem das Bereitstellen einer Vielzahl von Reihen mit einer ungeraden Reihe und einer geraden Reihe umfasst, und dass die Feineinstellungsschaltung Verzögerungen auswählt, die um eine Verzögerung zwischen der ungeraden Reihe und der geraden Reihe versetzt sind.
